# EUROPEAN PATENT APPLICATION

(11) **EP 1 787 964 A2**
(43) Date of publication of application: **23.05.2007**
(21) Application number: 06023821.9
(22) Date of filing: 16.11.2006
(51) Int. Cl.: C03C 17/32

(54) **Surface antifogging, antisoiling, tempered glass and method for producing the same**

(30) Priority: 17.11.2005 JP 2005333323
(71) Applicant: Fujifilm Corporation, Minato-ku Tokyo (JP)
(72) Inventor: Kunita, Kazuto ujifilm Corporation, Haibara-gun Shizuoka-ken (JP); Yamasaki, Sumiaki Fujifilm Corporation, Ashigarakami-gun Kanagawa (JP)
(74) Representative: HOFFMANN EITLE

(57) **Abstract**

The present invention provides a surface antifogging, antisoiling, tempered glass containing a glass formed by a float process or a down draw process and a polymer chain represented by formula (I) chemically bonded to a surface of the glass, and a method for producing the same. In formula (I), X¹ to X³ each independently represent a hydrogen atom, a hydrocarbon group having 1 to 10 carbon atoms, or -CO₂R¹, R¹ represents a hydrogen atom, an alkaline metal, or a hydrocarbon group having 1 to 10 carbon atoms, and Y represents a functional group having a molecular weight of 100,000 or less containing a group selected from -NHSO₂R², -NHCOR², etc.

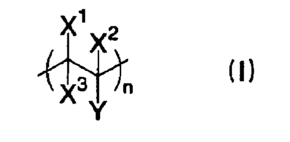

## Description

### BACKGROUND OF THE INVENTION

### Field of the Invention

The present invention relates to a surface antifogging, antisoiling, tempered glass, which is provided by forming a hydrophilic film excellent in hydrophilicity and abrasion resistance on a glass surface, has a surface excellent in antisoiling and antifogging properties, and further has an excellent scratch resistance, and a method for producing the same.

### Description of the Related Art

In view of the uses of glass, antisoiling properties of preventing smear on glass surfaces and antifogging properties of preventing fogging due to water droplets are important properties in practice, and various technologies related thereto have been proposed.
Colburn processes, fourcourt processes, float processes, fusion processes, down draw processes, and redraw processes have been known as glass production processes. Among them, the float processes, which include flowing melted glass onto melted tin to form glass sheets, can provide highly smooth glass usable as mirror surfaces. Further, it is known that the down draw processes can provide very thin glass with high thickness accuracy, though the processes require advanced melting technologies and facilities.
Glass produced by the float processes and the down draw processes are higher in shape accuracy as compared with those produced by the other processes, whereby the glasses has been used for automobiles, architectural structures, display devices, etc. In these fields, it is desired that surface scratch resistance, impact resistance (physical strength), antifogging properties, and antisoiling properties of glass are further improved.

The physical strength of glass can be improved by glass composition control or a chemical surface treatment in its production processes, by attaching a resin film to the glass, by stacking glass sheets, or by forming a laminated glass sandwiching an intermediate resin film. However, neither a chemical surface treatment satisfying all the requirements of scratch resistance, antifogging properties, and antisoiling properties of the glass surface, nor a surface covering resin film with such properties have not been found.
Further, from the viewpoint of production efficiency, a technology for satisfying the requirements of the scratch resistance, antifogging properties, and antisoiling properties, etc. by a simple chemical surface treatment following the glass production processes without the need for a surface covering resin film to be attached, and a functional glass produced by such a technology have been eagerly desired.

For example, as chemical surface treatments for providing glass surfaces with the antifogging and antisoiling properties, methods of utilizing the photocatalystic activity of titanium oxide have been proposed (see, e.g. WO/1996/029375), and further, examples of using photocatalysts for chemically treating glass has been proposed (see, e.g. Japanese patent application laid-open (JP-A) 10-146530). The photocatalyst materials can achieve excellent hydrophilicity and antisoiling properties, but they cannot be used without light as indicated by their name. Further, the typical photocatalyst materials of fine titanium oxide particle films are poor in filming properties and brittle, showing extremely low scratch resistance, whereby it is difficult, in practice, to obtain a practically satisfactory durability by using them.
As methods for achieving the antisoiling properties without the photocatalysts, chemical treatments using fluororesin particles and low molecular silane coupling agents (see, e.g. JP-A No. 7-13 8046) and chemical treatments using hydrosilylation reactions between hydrocarbon-based resins and organic silicon compounds (see, e.g. JP-A No.2004-322014) have been proposed. However, these treatments also result in poor scratch resistance and durability.

### SUMMARY OF THE INVENTION

The present invention has been made in consideration of the above-described circumstances and provides a surface antifogging, antisoiling, tempered glass containing a glass formed by a float process or a down draw process, the glass being chemically bonded to a polymer chain represented by formula (I): 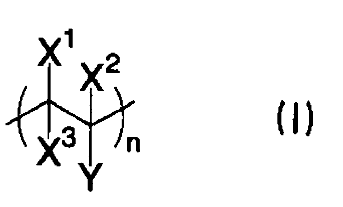 wherein X¹ to X³ each independently represent a hydrogen atom, a hydrocarbon group having 1 to 10 carbon atoms, or -CO₂R¹, R¹ represents a hydrogen atom, an alkaline metal, or a hydrocarbon group having 1 to 10 carbon atoms, 2 or more of X¹ to X³ may be bonded together to form a ring structure, Y represents a functional group having a molecular weight of 100,000 or less containing at least one group selected from the group consisting of -NHSO₂R², -NHCOR², -SO₂NHR³, -CONHR³, -CO₂R¹, -SO₃R¹, -PO₃R¹₂, -OR³, -Si(OR³)₃, and -CF₃, R¹ has the same meanings as above, R² represents a hydrocarbon group having 1 to 10 carbon atoms, R³ represents a hydrogen atom or a hydrocarbon group having 1 to 10 carbon atoms, and n represents a repeating unit number of 10 to 5,000. The polymer chain represented by formula (I) may be a copolymer chain containing different structural units of the formula (I). The glass is bonded to the polymer chain represented by formula (I) by a chemical bond formed between a surface of the glass and a group provided by removing at least 1 atom from Y or between the glass surface and an end of the polymer chain.

The surface antifogging, antisoiling, tempered glass of the invention utilizes glass-organic polymer hybridization.

It is practically preferred that the polymer chain represented by formula (I) is chemically bonded to the glass surface such that an end bondable polymer represented by formula (II) (hereinafter sometimes referred to as "specific polymer") is chemically bonded by a sol-gel method to the glass surface.

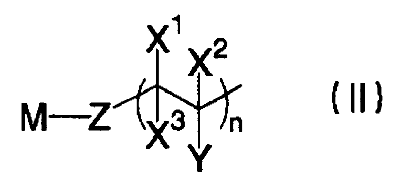

In formula (II), Z represents a divalent linking group containing an atom selected from C, H, N, O, and S; M represents -Si(OR¹)₃, -Ti(OR¹)₃, -Al(OR¹)₂, or -Zr(OR¹)₃; and X¹ to X³, Y, n, and R¹ have the same definitions as those of formula (I).

The glass prepared by the float process or down draw process, to which the polymer chain is chemically bonded, may be a common glass sheet, and may be a layered glass of two glass sheets, and may be a laminated glass formed by sandwiching an intermediate resin layer between two glass sheets formed by the float process or down draw process.

In an application embodiment of the surface antifogging, antisoiling, tempered glass of the invention, the end bondable polymer represented by formula (II) is chemically bonded by the sol-gel method to the glass formed by the float process, to obtain a tempered glass for a vehicle or architectural structure. In another application embodiment of the surface antifogging, antisoiling, tempered glass of the invention, the end bondable polymer represented by formula (II) is chemically bonded by the sol-gel method to the glass formed by the down draw process, to obtain a tempered glass for a display device.
In an aspect of the invention, an organic polymer with high antifogging and antisoiling properties is chemically bonded to the glass surface, so that the resultant tempered glass can show a scratch resistance equal to that of the resin film and can further show the antifogging and antisoiling properties without light effects.

A method of the invention for producing a surface antifogging, antisoiling, tempered glass is characterized by containing preparing a glass formed by a float process or a down draw process, applying a coating liquid containing an end bondable polymer represented by formula (II) to a surface of the prepared glass, inducing and promoting a sol-gel reaction to bond the end bondable polymer to the surface of the glass.

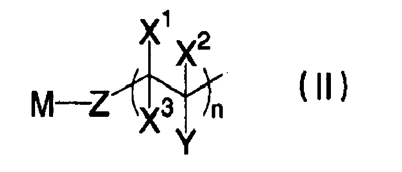

In formula (II), Z represents a divalent linking group containing an atom selected from C, H, N, O, and S, M represents -Si(OR¹)₃, -Ti(OR¹)₃, -Al(OR¹)₂, or -Zr(OR¹)₃, and X¹ to X³, Y, n, and R' have the same definitions as those of the formula (I).
Thus, in the method of the invention, a tempered glass having the surface antifogging properties, the antisoiling properties, and the scratch resistance can be produced by the simple chemical treatment of the sol-gel method following the glass production processes, and thus, the method of the invention can be said to be a breakthrough method.

The mechanism of the invention is not certain, but is thought to be as follows. It is thought that the polymer represented by formula (I), which has a high density of hydrophilic or oil-repellent functional groups, is chemically bonded to the glass directly utilizing the free mobility of the polymer chain in the tempered glass of the invention, whereby the high antifogging and antisoiling properties are achieved. In a preferred embodiment of the invention, the end bondable polymer having the hydrophilic, oil-repellent, functional groups is chemically bonded to the glass surface by a sol-gel method to form a surface layer. It is thought that, in this preferred embodiment, a thick film, in which the polymer can effectively show its physical strength, is formed on the glass surface, and the surface layer has a crosslinked structure in the film, so that surface scratch resistance can be maintained and the glass surface can be made soft to increase the toughness of the glass itselg. Further, it is thought that the excellent surface antisoiling properties, antifogging properties, life-spans thereof, and surface scratch resistance are achieved because highly smooth glass obtained by a float process or a down draw process is used for chemically bonding the end of the polymer chain, instead of glass obtained by common production methods. Thus surface treatment, i.e. the introduction of the polymer chain, may be efficiently uniformly carried out due to improved coating properties, to show a synergic effect with the smoothness increase.

### BRIEF DESCRIPTION OF DRAWINGS

Fig. 1 is a cross-sectional view showing an example of the tempered glass of the invention, provided by chemically bonding a specific polymer to a glass sheet surface.
Fig. 2 is a cross-sectional view showing an example of the tempered glass of the invention, provided by using a laminate of 2 glass sheets as a base glass material.
Fig. 3 is a cross-sectional view showing an example of the tempered glass of the invention, provided by using a layered glass having a resin layer between glass sheets as a base glass material.
Fig. 4 is a cross-sectional view showing a layer structure of a laminated glass for vehicles, which was used in an impact resistance evaluation (a stone impact test).

### DETAILED DESCRIPTION OF THE INVENTION

The present invention will be described in detail below.
The surface antifogging, antisoiling, tempered glass of the invention contains a glass formed by a float process or a down draw process, the glass being chemically bonded to a polymer chain represented by formula (I).

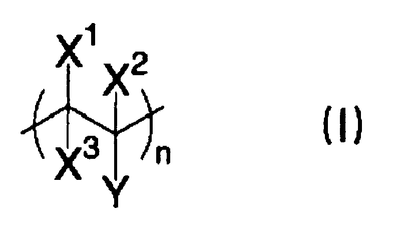

In formula (I), X¹ to X³ each independently represent a hydrogen atom, a hydrocarbon group having 1 to 10 carbon atoms, or -CO₂R¹, and R¹ represents a hydrogen atom, an alkaline metal, or a hydrocarbon group having 1 to 10 carbon atoms.
The hydrocarbon group of X¹ to X³ may be an alkyl group having 1 to 10 carbon atoms, an aryl group having 6 to 10 carbon atoms, and the like, and is preferably a straight, branched, or cyclic alkyl group having 8 or less carbon atoms. Specific examples thereof include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, and a cyclopentyl group.

These hydrocarbon groups may further have a substituent.
When the alkyl group has a substituent, the substituted alkyl group is formed by a bond between the substituent and an alkylene group, and herein the substituent is a monovalent non-metallic atomic group other than hydrogen. Preferred examples of the substituents include halogen atoms (-F, -Br, -Cl, -I), a hydroxyl group, alkoxy groups, aryloxy groups, a mercapto group, alkylthio groups, arylthio groups, alkyldithio groups, aryldithio groups, an amino group, N-alkylamino groups, N,N-diarylamino groups, N-alkyl-N-arylamino groups, acyloxy groups, a carbamoyloxy group, N-alkylcarbamoyloxy groups, N-arylcarbamoyloxy groups, N,N-dialkylcarbamoyloxy groups, N,N-diarylcarbamoyloxy groups, N-alkyl-N-arylcarbamoyloxy groups, alkylsulfoxy groups, arylsulfoxy groups, acylthio groups, acylamino groups, N-alkylacylamino groups, N-arylacylamino groups, a ureido group, N'-alkylureido groups, N',N'-dialkylureido groups, N'-arylureido groups, N',N'-diarylureido groups, N'-alkyl-N'-arylureido groups, N-alkylureido groups,

N-arylureido groups, N'-alkyl-N-alkylureido groups, N'-alkyl-N-arylureido groups, N',N'-dialkyl-N-alkylureido groups, N',N'-dialkyl-N-arylureido groups, N'-aryl-N-alkylureido groups, N'-aryl-N-arylureido groups, N',N'-diaryl-N-alkylureido groups, N',N'-diaryl-N-arylureido groups, N'-alkyl-N'-aryl-N-alkylureido groups, N'-alkyl-N'-aryl-N-arylureido groups, alkoxycarbonylamino groups, aryloxycarbonylamino groups, N-alkyl-N-alkoxycarbonylamino groups, N-alkyl-N-aryloxycarbonylamino groups, N-aryl-N-alkoxycarbonylamino groups, N-aryl-N-aryloxycarbonylamino groups, a formyl group, acyl groups, a carboxyl group,

alkoxycarbonyl groups, aryloxycarbonyl groups, a carbamoyl group, N-alkylcarbamoyl groups, N,N-dialkylcarbamoyl groups, N-arylcarbamoyl groups, N,N-diarylcarbamoyl groups, N-alkyl-N-arylcarbamoyl groups, alkylsulfinyl groups, arylsulfinyl groups, alkylsulfonyl groups, arylsulfonyl groups, a sulfo group (-SO₃H) and conjugate base groups thereof (hereinafter referred to as sulfonato groups), alkoxysulfonyl groups, aryloxysulfonyl groups, a sulfinamoyl group, N-alkylsulfinamoyl groups, N,N-dialkylsulfinamoyl groups, N-arylsulfinamoyl groups, N,N-diarylsulfinamoyl groups, N-alkyl-N-arylsulfinamoyl groups, a sulfamoyl group, N-alkylsulfamoyl groups, N,N-dialkylsulfamoyl groups, N-arylsulfamoyl groups, N,N-diarylsulfamoyl groups, N-alkyl-N-arylsulfamoyl groups, a phosphono group (-PO₃H₂) and conjugate base groups thereof (hereinafter referred to as phosphonato groups), dialkylphosphono groups (-PO₃(alkyl)₂), diarylphosphono groups (-PO₃(aryl)₂), alkylarylphosphono groups (-PO₃(alkyl)(aryl)), monoalkylphosphono groups (-PO₃H(alkyl)) and conjugate base groups thereof (hereinafter referred to as alkylphosphonato groups), monoarylphosphono groups (-PO₃H(aryl)) and conjugate base groups thereof (hereinafter referred to as arylphosphonato groups), a phosphonooxy group (-OPO₃H₂) and conjugate base groups thereof (hereinafter referred to as phosphonatooxy groups), dialkylphosphonooxy groups (-OPO₃(alkyl)₂), diarylphosphonooxy groups (-OPO₃(aryl)₂), alkylarylphosphonooxy groups (-OPO(alkyl)(aryl)), monoalkylphosphonooxy groups (-OPO₃H(alkyl)) and conjugate base groups thereof (hereinafter referred to as alkylphosphonatooxy groups), monoarylphosphonooxy groups (-OPO₃H(aryl)) and conjugate base groups thereof (hereinafter referred to as arylphosphonatooxy groups), a morpholino group, a cyano group, a nitro group, aryl groups, alkenyl groups, and alkynyl groups.

Specific examples of the alkyl groups in these substituents include the above-mentioned alkyl group examples, and specific examples of the aryl groups include a phenyl group, a biphenyl group, a naphtyl group, a tolyl 2 group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, and a phosphonatophenyl group. Further, examples of the alkenyl groups include a vinyl group, a 1-propenyl group, a 1-butenyl group, a cinnamyl group, and a 2-chloro-1-ethenyl group, and examples of the alkynyl groups include an ethynyl group, a 1-propynyl group, a 1-butynyl group, and a trimethylsilylethynyl group. In the acyl groups (G¹CO-), examples of G¹ include hydrogen, and the above alkyl groups and aryl groups.

Among these substituents, more preferred are halogen atoms (-F, -Br, -C1, -I), alkoxy groups, aryloxy groups, alkylthio groups, arylthio groups, N-alkylamino groups, N,N-dialkylamino groups, acyloxy groups, N-alkylcarbamoyloxy groups, N-arylcarbamoyloxy groups, acylamino groups, a formyl group, acyl groups, a carboxyl group, alkoxycarbonyl groups, aryloxycarbonyl groups, a carbamoyl group, N-alkylcarbamoyl groups, N,N-dialkylcarbamoyl groups, N-arylcarbamoyl groups, N-alkyl-N-arylcarbamoyl groups, a sulfo group, sulfonato groups, a sulfamoyl group, N-alkylsulfamoyl groups, N,N-dialkylsulfamoyl groups, N-arylsulfamoyl groups, N-alkyl-N-arylsulfamoyl groups, a phosphono group, phosphonato groups, dialkylphosphono groups, diarylphosphono groups, monoalkylphosphono groups, alkylphosphonato groups, monoarylphosphono groups, arylphosphonato groups, phosphonooxy groups, phosphonatooxy groups, aryl groups, and alkenyl groups.

The alkylene groups in the substituted alkyl groups include divalent organic groups provided by removing one hydrogen atom from the above alkyl groups having 1 to 20 carbon atoms. Preferred examples of the alkylene groups include straight alkylene groups having 1 to 12 carbon atoms, branched alkylene groups having 3 to 12 carbon atoms, and cyclic alkylene groups having 5 to 10 carbon atoms. Preferred examples of the substituted alkyl groups provided by connecting the substituents and the alkylene groups include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonooxypropyl group, a phosphonatooxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group.

The hydrocarbon group preferably has 8 or less carbon atoms, more preferably has 3 or less carbon atoms, most preferably has 1 carbon atom.

When each of X¹ to X³ represents -CO₂R¹, R¹ represents a hydrogen atom, an alkaline metal, or a hydrocarbon group having 1 to 10 carbon atoms.
The hydrocarbon group of R¹ has the same definitions as those of X¹ to X³, and preferably has 8 or less carbon atoms, more preferably has 3 or less carbon atoms, most preferably has 1 carbon atom.
The alkaline metal may be Li, Na, K, or Rb, and is bonded to a carboxylate anion in the monovalent cation state.
Most preferred examples of X¹, X², and X³ include a hydrogen atom, a hydrocarbon group with 1 carbon atom, -CO₂CH₃, and -CO₂H. Particularly X³ is most preferably -CO₂CH₃, a hydroxymethyl group, an alkoxymethyl group, an acyloxymethyl group, an alkylthiomethyl group, an acylthiomethyl group, an alkylaminomethyl group, or an acylaminomethyl group.
In formula (I), 2 or more of X¹ to X³ may be bonded together to form a ring structure, which is preferably a 5- or 6-membered ring structure.

Y In formula (I) represents a functional group having a molecular weight of 100,000 or less containing at least one group selected from the group consisting of -NHSO₂R², -NHCOR², -SO₂NHR³, -CONHR³, -CO₂R¹, -SO₃R¹, -PO₃R¹₂, -OR³, -Si(OR³)₃, and -CF₃. R¹ has the same meanings as above, R² represents a hydrocarbon group having 1 to 10 carbon atoms, R³ represents a hydrogen atom or a hydrocarbon group having 1 to 10 carbon atoms.
n represents the number of repeating units, 10 to 5,000. The hydrocarbon group described herein has the same meanings as that of R¹.

Most preferred examples ofY include -CONH₂, -CO₂H, -CO₂Na, -SO₃H,
- SO₃Na-CONHC(CH₃)₂CH₂SO₃H, -CONHC(CH₃)₂CH₂SO₃Na, -CO(OCH₂CH₂)ₖCONH₂,
- CO(OCH₂CH₂)ₖCO₂H, -CO(OCH₂CH₂)ₖCO₂Na, -CO(OCH₂CH₂)ₖSO₃H,
- CO(OCH₂CH₂)ₖSO₃Na, -CO(OCH₂CH₂)ₖOH, -CO(OCH₂CH₂)ₖOCH₃,
- Q-(CH₂CH(CONH₂))ₖ-, -Q-(CH₂CH(CO₂H))ₖ-, and
- Q-(CH₂CH(CONHC(CH₃)₂CH₂SO₃H))ₖ-.

In the above preferred examples ofY, k is 1 to 20,000. Q is a divalent linking group composed of C, H, N, O, and S, and is preferably -CH₂OCOCH₂CH₂S- or -CO₂CH₂CH(OH)CH₂OCOCH₂CH₂S-.

n represents the repeating unit number of 10 to 5,000. n is preferably 10 to 1,000, more preferably 30 to 1,000, most preferably 50 to 500.
In the invention, the polymer chain represented by formula (I) may be a copolymer chain containing different structural units of the formula (I).
Examples of the structural units of the polymer chain of the formula (I) are illustrated below without intention of restricting the invention. The polymer chain represented by formula (I) is formed by connecting 10 to 5,000 structural units, and 1, 2, or more types of such structural units may be used.

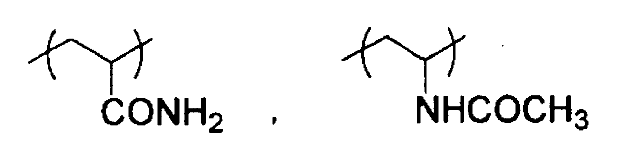

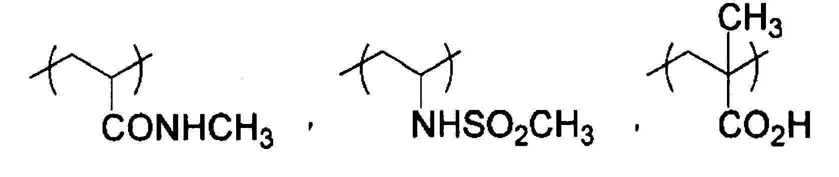

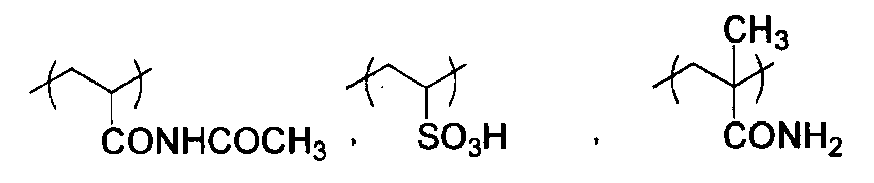

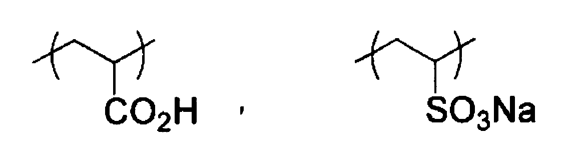

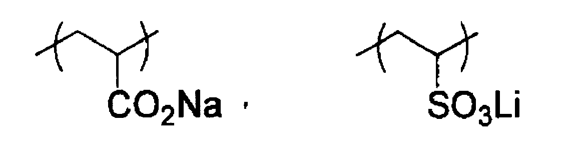

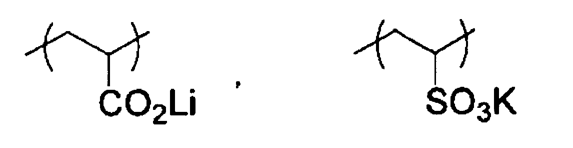

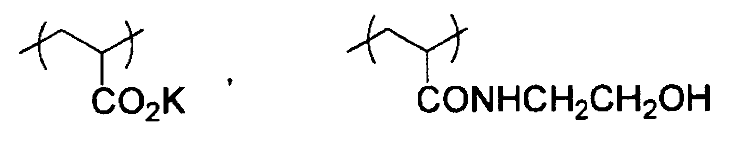

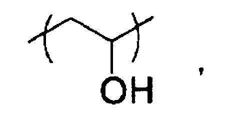

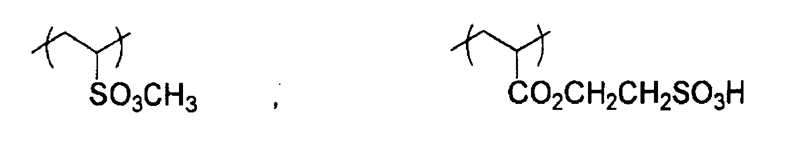

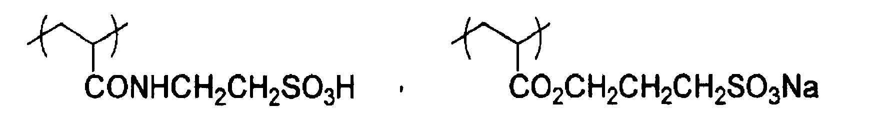

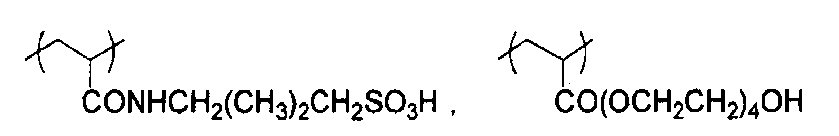

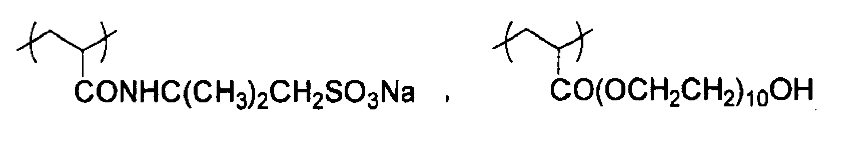

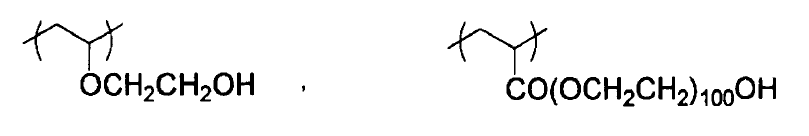

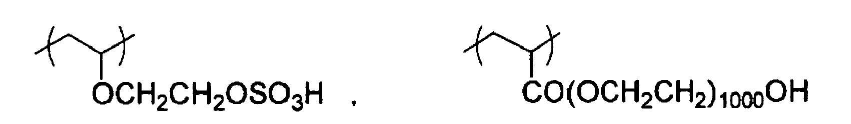

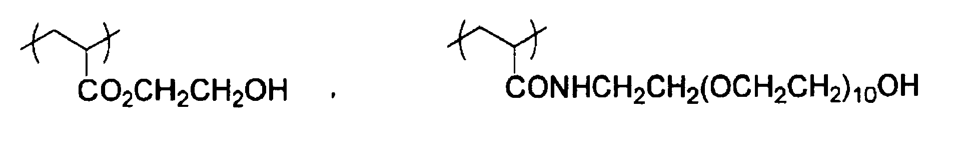

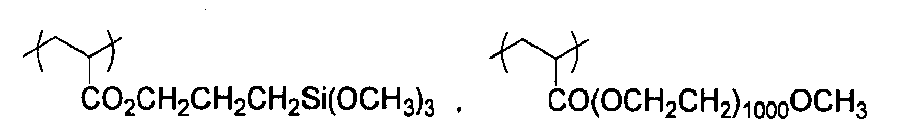

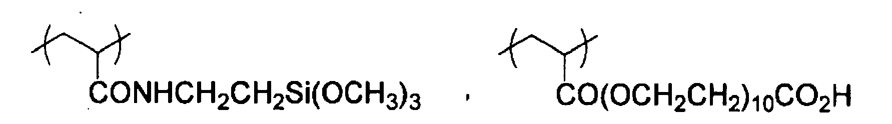

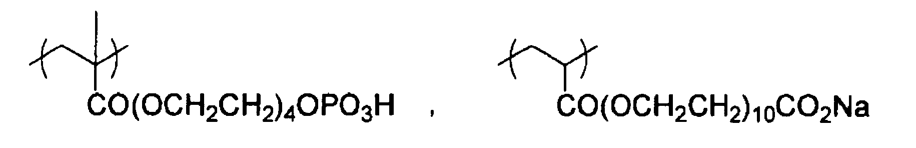

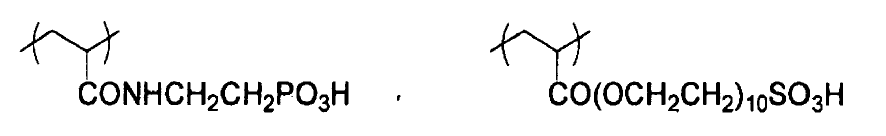

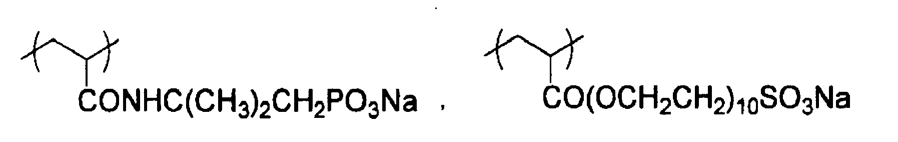

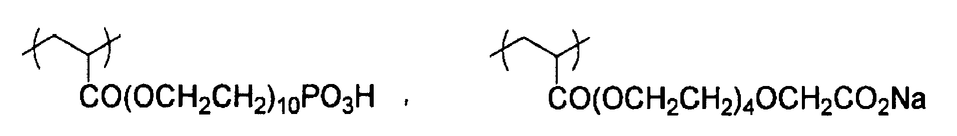

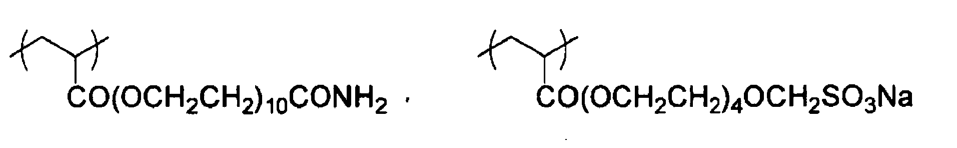

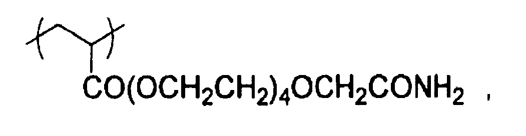

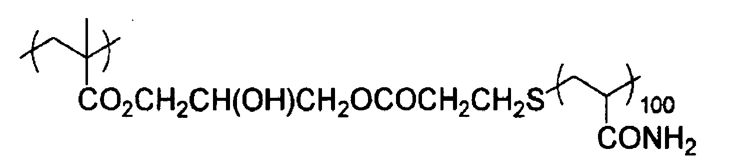

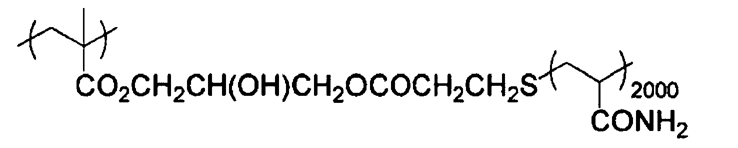

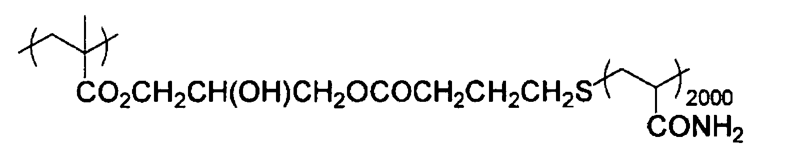

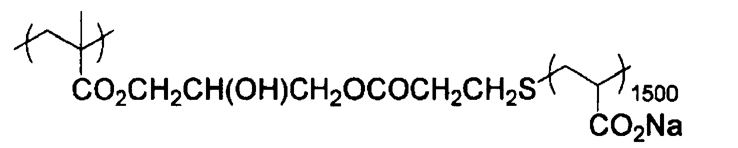

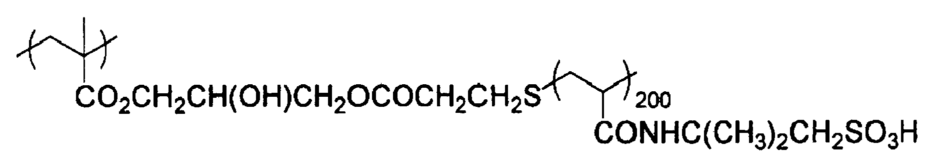

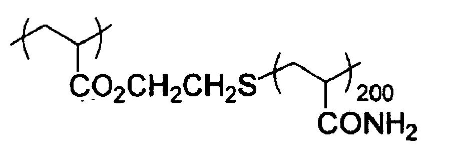

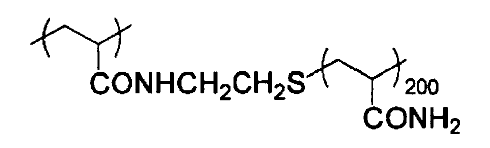

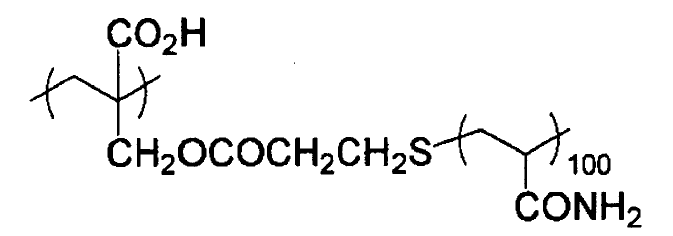

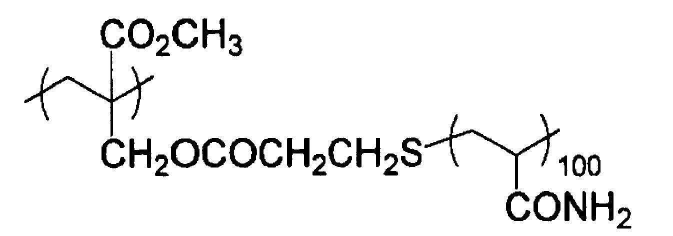

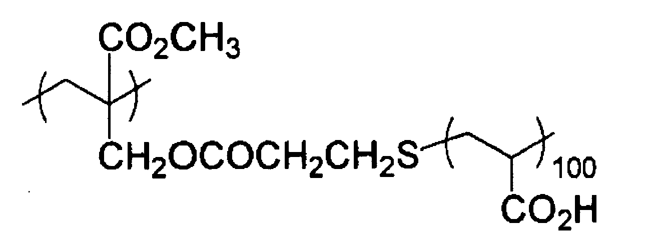

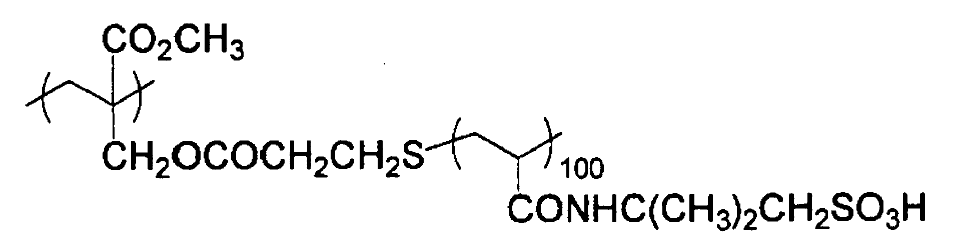

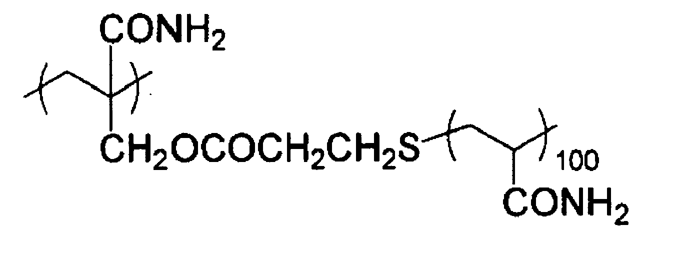

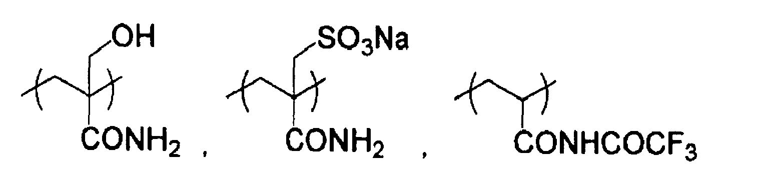

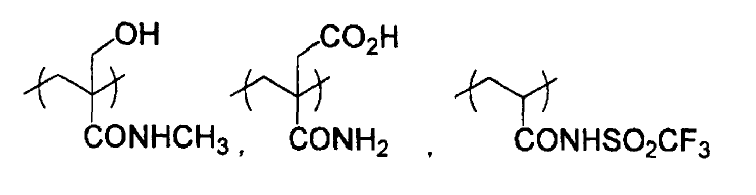

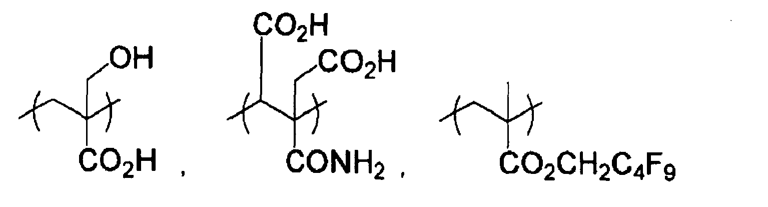

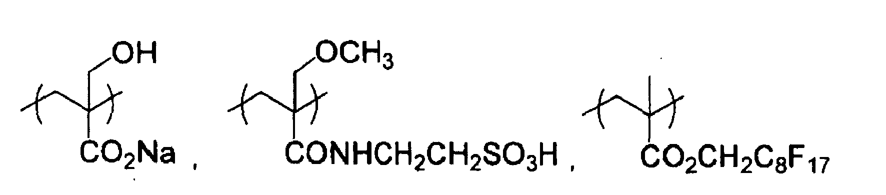

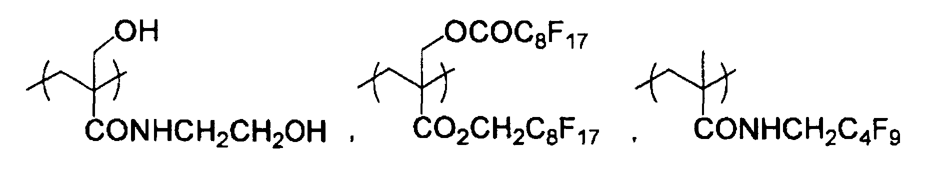

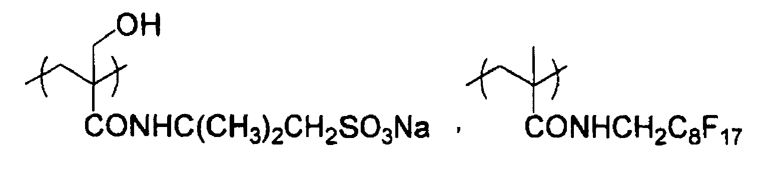

The polymer chain represented by formula (I) is connected to the glass by a chemical bond, which is formed between the glass surface and a group provided by removing at least 1 atom from Y or between the glass surface and an end of the polymer chain.

Specific examples of the polymers represented by formula (I), Example Compounds (I-1) to (I-20), are illustrated below without intention of restricting the invention. In the following specific examples, Example Compounds (I-1) to (I-6) and (I-14) containing a plurality of types of structural units are random copolymers containing two types of structural units at a mole ratio shown.

| | | |
|---|---|---|
| I -1 | 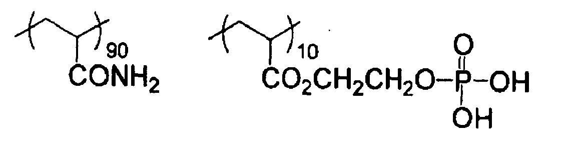 | Mw 50000 |
| I -2 | 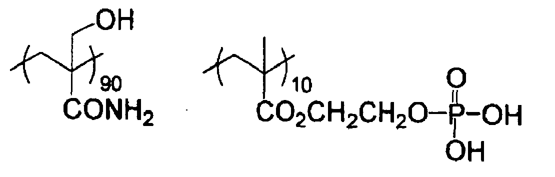 | Mw 20000 |
| I -3 | 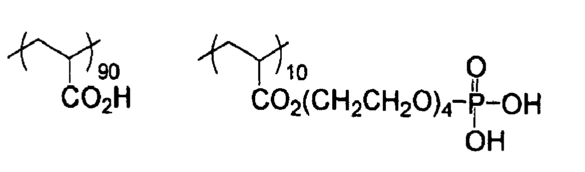 | Mw 50000 |
| I -4 | 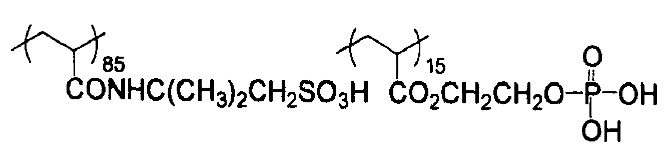 | Mw 35000 |
| I -5 | 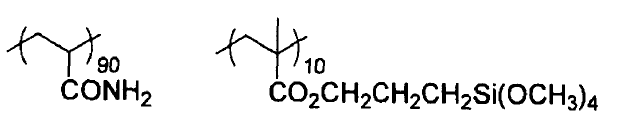 | Mw 100000 |
| I-6 | 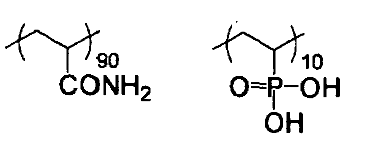 | Mw 5000 |
| I - 7 | 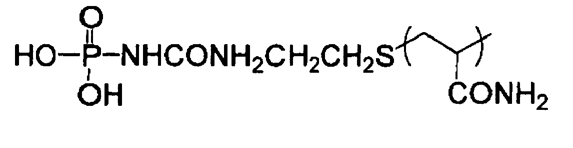 | Mw 50000 |
| I - 8 | 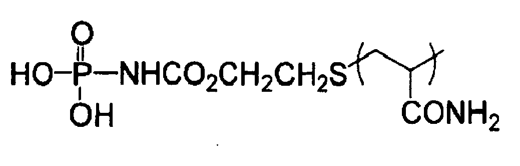 | Mw 20000 |
| I - 9 | 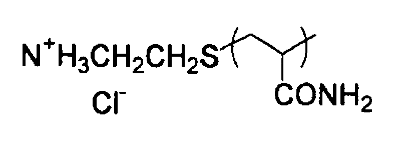 | Mw 20000 |
| I - 10 | 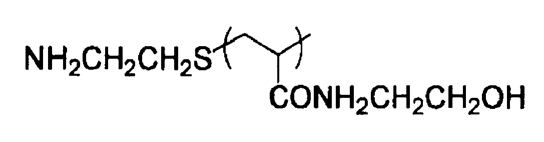 | Mw 50000 |
| I-11 | 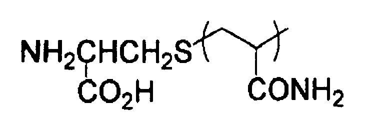 | Mw 10000 |
| I - 12 | 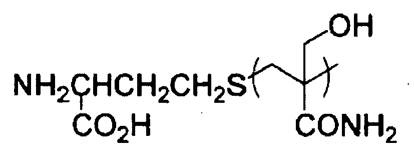 | Mw 200000 |
| I - 13 | 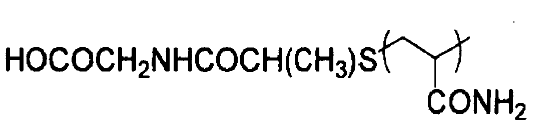 | Mw 20000 |
| I -14 | 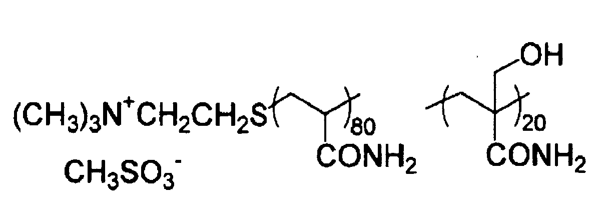 | Mw 20000 |
| I -15 | 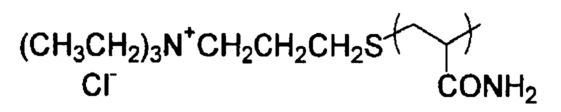 | Mw 50000 |
| I -16 | 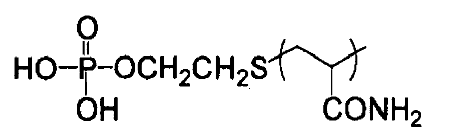 | Mw 20000 |
| I -17 | 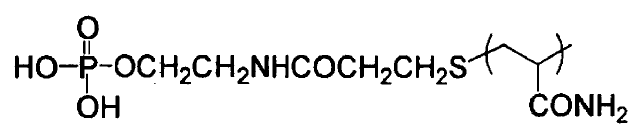 | Mw 50000 |
| I -18 | 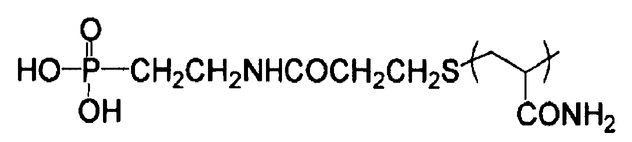 | Mw 50000 |
| I -19 | 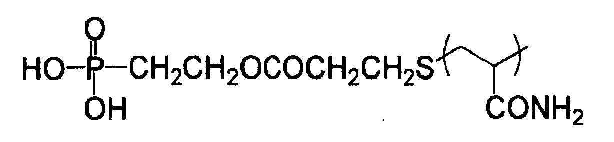 | Mw 20000 |
| I -20 | 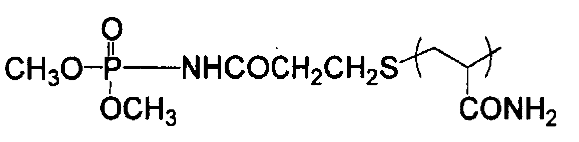 | Mw 50000 |

For example, the polymer chain may be chemically connected to a silanol group of the glass surface such that a silane coupling group of the polymer chain is used to form a covalent bond, an ammonium group is used to form a strong ionic bond, or a phosphoric acid or phosphonic acid group is used to form a strong hydrogen bond. It is most preferred that dehydration condensation between a silanol group of the glass surface and an end bondable polymer represented by formula (II) is carried out by a sol-gel method to form a covalent bond.

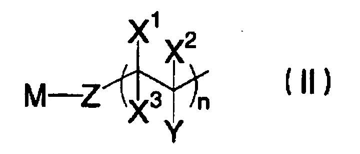

The meanings and preferred embodiments of X¹ to X³, Y, and n of the formula (II) are the same as those of the formula (I).
Z represents a divalent linking group containing an atom selected from C, H, N, O, and S.
Preferred examples of Z include hydrocarbon linking groups having an S atom and 1 to 10 carbon atoms. Z is more preferably a hydrocarbon linking group having an O atom, an S atom, and 1 to 10 carbon atoms, most preferably a hydrocarbon linking group having an N atom, an S atom, and 1 to 10 carbon atoms.

More specifically, Z is preferably -CH₂CH₂S- or -CH₂CH₂CH₂S-, more preferably
- CH₂CH(OH)CH₂OCOCH₂CH₂S-, -CH₂CH(OH)CH₂OCOCH₂CH₂CH₂S-,
- CH₂CH₂OCOCH₂CH₂S-, etc., most preferably -CH₂CH₂CO₂NHCH₂CH₂S-,
- CH₂CH₂CO₂NHCH₂CH₂CH₂S-, -CH₂CH₂CO₂NHCH₂CH₂S-,
- CH₂CH₂CO₂NHCH₂CH₂CH₂S-, -CH₂CH₂NHCOCH₂CH₂S-, -CH₂CH₂CONHCH₂CH₂S-, and the like.

M represents -Si(OR¹)₃, -Ti(OR¹)₃, -Al(OR¹)₂, or -Zr(OR¹)₃, and herein the meanings and preferred embodiments of R¹ are the same as those of the formula (I).

Specific examples of the polymers represented by formula (II), Example Compounds (II-1) to (II-25), are illustrated below without intention of restricting the invention.

| | | |
|---|---|---|
| II-1 | 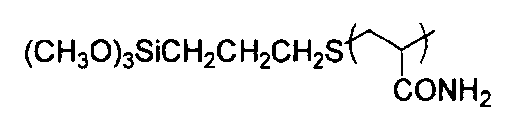 | Mw 3000 |
| II-2 | 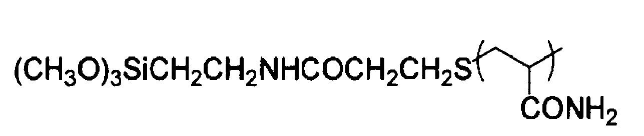 | Mw 3000 |
| II-3 | 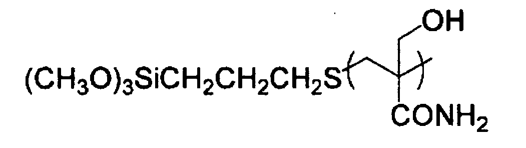 | Mw 100000 |
| II-4 | 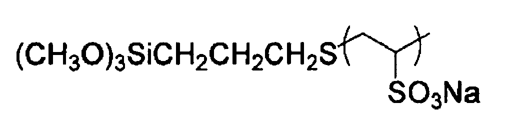 | Mw 7000 |
| II-5 | 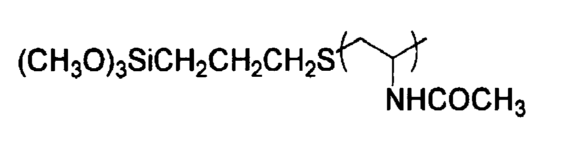 | Mw 10000 |
| II-6 | 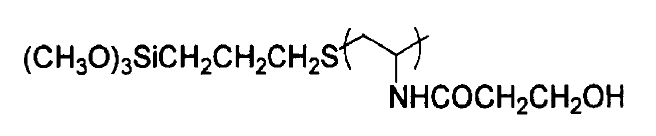 | |
| II-7 | 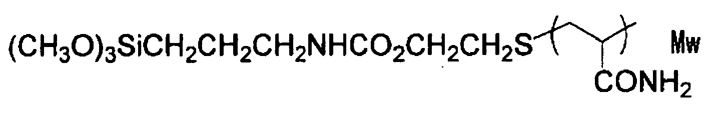 | 10000 |
| II-8 | 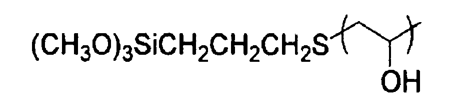 | Mw 30000 |
| II -9 | 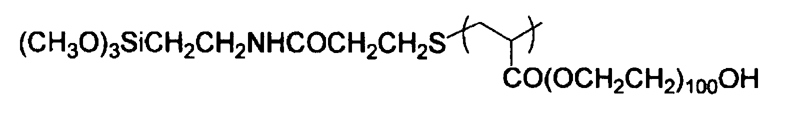 | Mw 3000 |
| II-10 | 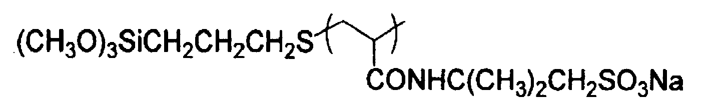 | Mw 100000 |
| II-11 | 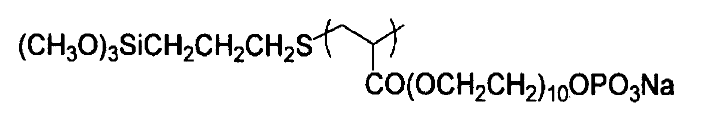 | Mw 7000 |
| II-12 | 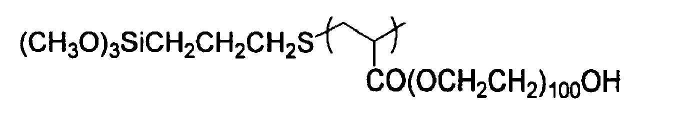 | Mw 10000 |
| II -13 | 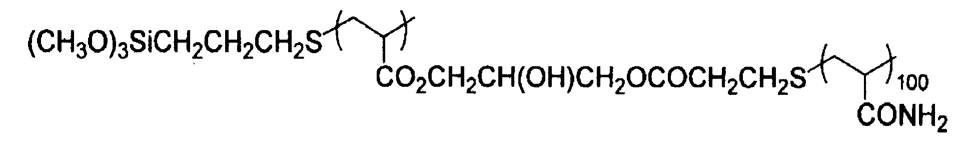 | Mw 10000 |
| II -14 | 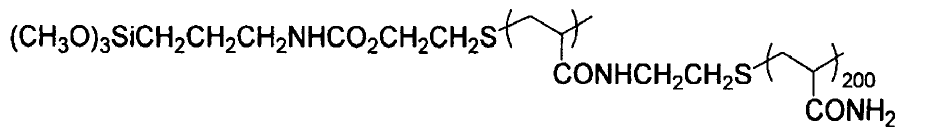 | Mw 3000 |
| II-15 | 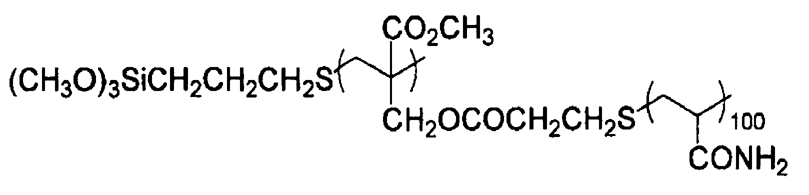 | Mw 10000 |
| II-16 | 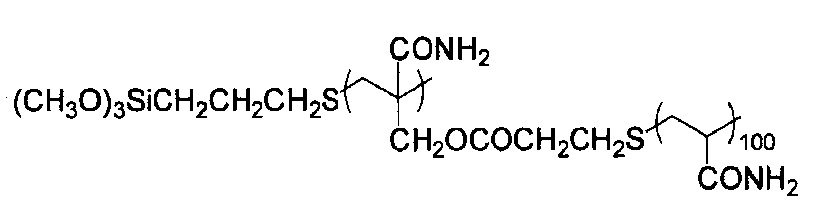 | Mw 3000 |
| II -17 | 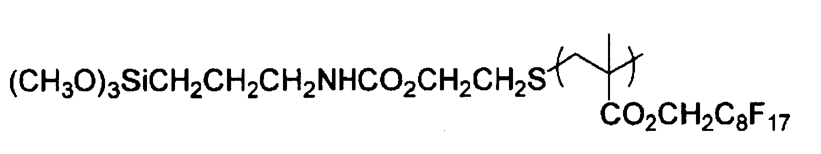 | Mw 10000 |
| II-18 | 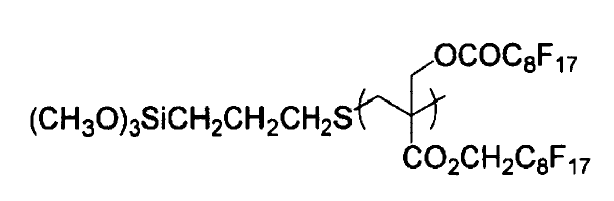 | Mw 30000 |
| II-19 | 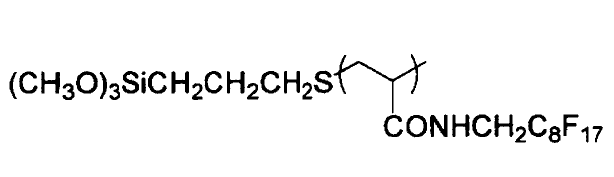 | Mw 10000 |
| II-20 | 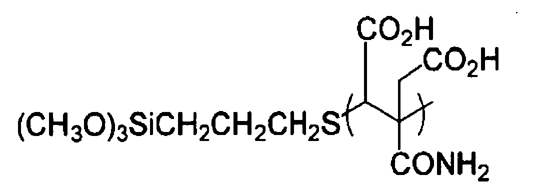 | Mw 1000 |
| II - 21 | 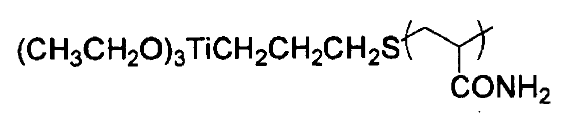 | Mw 30000 |
| II - 22 | 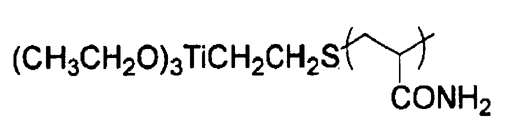 | Mw 30000 |
| II - 23 | 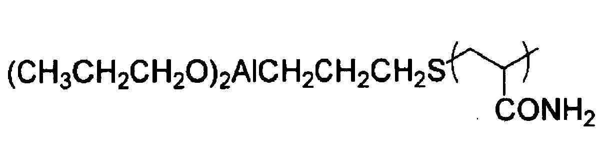 | Mw 30000 |
| II - 24 | 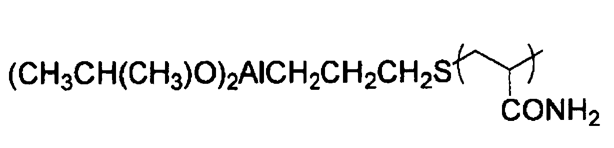 | Mw 50000 |
| II-25 | 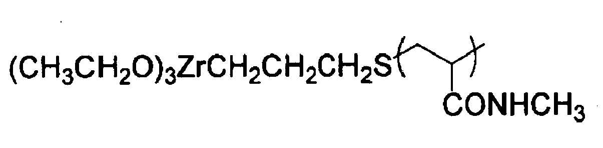 | Mw 10000 |

<Synthesis of polymer>
The end bondable polymer (the specific polymer) represented by formula (II) can be synthesized by a method described in JP-A No.2002-361800, etc.
The specific polymer according to the invention can be synthesized by radical polymerization of a radical-polymerizable monomer represented by formula (i) using a silane coupling agent represented by formula (ii), which can show a chain transfer ability in the radical polymerization. The silane coupling group is introduced to the end of the polymer main chain in the radical polymerization due to the chain transfer ability, whereby a polymer represented by formula (iii) can be synthesized.

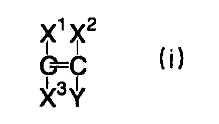

(RO)₃Si-CH₂CH₂CH₂SH (ii)

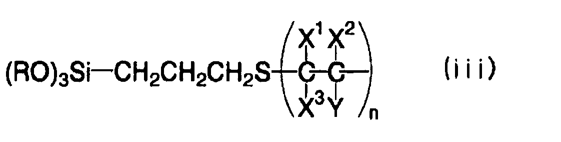

X¹ to X⁴, Y, R, and n of the formulae (i), (ii) and (iii) have the same definitions as those of the above formula (II). The compounds for the synthesis represented by formulae (i) and (ii) are commercially available and can be easily synthesized.

The radical polymerization for synthesizing the specific polymer may be carried out by using known methods. Common radical polymerization methods described in Shin Kobunshi Jikkengaku 3, Kobunshi no Gosei To Hanno 1 (The Society of Polymer Science, Japan, Kyoritsu Shuppan Co., Ltd.), Shin Jikken Kagaku Koza 19, Kobunshi Kagaku (I) (The Chemical Society of Japan, Maruzen), Bussitsu Kogaku Koza, Kobunshi Gosei Kagaku (Tokyo Denki University Press), etc. can be used in the invention.

### <Bonding of polymer chain to glass surface>

A preferred embodiment of chemically bonding the polymer represented by formula (I) to the glass surface will be described below.
For example, the polymer chain may be chemically connected to a silanol group of the glass surface such that a silane coupling group of the polymer is used to form a covalent bond, an ammonium group is used to form a strong ionic bond, or a phosphoric acid or phosphonic acid group is used to form a strong hydrogen bond. Thus the glass surface may be coated with the polymer represented by formula (I) having the silane coupling group, ammonium group, phosphoric acid group, or phosphonic acid group after the surface is treated with an acid or a base to increase the surface silanol group active sites. By coating the glass surface with the polymer represented by formula (I) in this manner, the covalent bond, ionic bond, or hydrogen bond, etc. is formed between the polymer and the glass, so that the polymer and the glass are strongly fixed by the chemical bond.

The chemical bond of the polymer represented by formula (I) and the glass surface may be formed between Y In formula (I) and the glass surface or between an end of the polymer chain and the glass surface.

Y is preferably -PO₃H₂ or -Si(OR³)₃, and -PO₃H₂ seems to form a hydrogen bond to the glass surface, and -Si(OR³)₃ seems to form a covalent bond in the state of -Si(OR³)₂O-, etc. The free mobility of the functional groups with the antifogging and antisoiling properties of the polymer side chain is preferably increased in the case of connecting the end of the polymer to the glass, as compared with the case of connecting Y to the glass.
It is more preferred that the polymer represented by formula (I) is used in combination with a compound represented by formula (III) to be hereinafter described and subjected to a sol-gel reaction, thereby forming a dense, firm coating on the glass surface.

Further, it is most preferred that, as described above, the end bondable polymer (the specific polymer) represented by formula (II), which is capable of forming a chemically firm, stable covalent bond, is connected to the silanol group on the glass surface by the sol-gel method. This method will be described in detail in the procedure order below.

First a coating liquid composition containing the specific polymer is prepared, and applied to the glass surface.
In the preparation of the polymer coating liquid composition, the specific polymer content is preferably 10% or more and less than 50% by mass based on the solid contents. When the content is within this range, preferable film strength and coating properties are achieved and crack in the film is reduced.
It is preferred that a compound represented by formula (III) is added to the coating liquid in addition to the specific polymer from the viewpoint of increasing the bonding strength of the polymer.
The compound represented by formula (III) (hereinafter sometimes referred to as the hydrolyzable compound) has a polymerizable functional group. The compound is a hydrolysis-polymerizable compound capable of acting as a crosslinking agent, and condensation-polymerized with the specific polymer to form a firm coating having a crosslinked structure.

**(R⁵)ₘ-X-(OR⁶)₄₋ₘ** (III)

In formula (III), R⁵ represents a hydrogen atom, an alkyl group, or an aryl group, R⁶ represents an alkyl group or an aryl group, X represents Si, Al, Ti, or Zr, and m represents an integer of 0 to 2.

The alkyl group of R⁵ or R⁶ preferably has 1 to 4 carbon atoms. The alkyl group and the aryl group may have a substituent, and examples of usable substituents include halogen atoms, amino groups, and a mercapto group.
It should be noted that the compound is a low molecular compound, and its molecular weight is preferably 1,000 or less.

Specific examples of the hydrolyzable compounds are described below without intention of restricting the invention.
In a case where X is Si and thus the hydrolyzable compound contains a silicon atom, examples thereof include trimethoxysilane, triethoxysilane, tripropoxysilane, tetramethoxysilane, tetraethoxysilane, tetrapropoxysilane, methyltrimethoxysilane, ethyltriethoxysilane, propyltrimethoxysilane, methyltriethoxysilane, ethyltriethoxysilane, propyltriethoxysilane, dimethyldimethoxysilane, diethyldiethoxysilane, γ-chloropropyltriethoxysilane, γ-mercaptopropyltrimethoxysilane, γ-mercaptopropyltriethoxysilane, γ-aminopropyltriethoxysilane, phenyltrimethoxysilane, phenyltriethoxysilane, phenyltripropoxysilane, diphenyldimethoxysilane, and diphenyldiethoxysilane.
Among them, particularly preferred ones are tetramethoxysilane, tetraethoxysilane, methyltrimethoxysilane, ethyltrimethoxysilane, methyltriethoxysilane, ethyltriethoxysilane, dimethyldiethoxysilane, phenyltrimethoxysilane, phenyltriethoxysilane, diphenyldimethoxysilane, diphenyldimethoxysilane, and the like.

In a case where X is A1 and thus the hydrolyzable compound contains aluminium, examples thereof include trimethoxy aluminate, triethoxy aluminate, tripropoxy aluminate, and tetraethoxy aluminate.
In a case where X is Ti and thus the hydrolyzable compound contains titanium, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate, and phenyltriethoxy titanate.
In a case where X is Zr and thus the hydrolyzable compound contains zirconium, examples thereof include zirconates corresponding to the above titanates.

When the hydrolyzable compound is added to the polymer coating liquid composition, the amount of the hydrolyzable compound is preferably such that the polymerizable groups in the hydrolyzable compound is 5 mol% or more, more preferably 10 mol% or more, based on the end bonding groups such as the silane coupling groups in the specific polymer. The upper limit of the amount of the hydrolyzable compound added is not particularly restricted as long as the compound can be sufficiently crosslinked with the specific polymer. However, addition of a large excess amount of the hydrolyzable compound can cause a problem that the surface of the resultant tempered glass is made sticky by the crosslinking agent remaining after the crosslinking.

The specific polymer having the reactive end group is dissolved in a solvent and well stirred, preferably together with the hydrolyzable compound (the crosslinking agent), so that the components are hydrolyzed and polycondensed. Thus obtained organic-inorganic complex sol liquid is used as the polymer coating liquid according to the invention, and a surface layer with high hydrophilicity and high film strength is formed using the liquid.
In the preparation of the organic-inorganic complex sol liquid, an acidic or basic catalyst is preferably used to accelerate the hydrolysis and polycondensation. The use of the catalyst is particularly preferred in view of achieving a practically desirable reaction efficiency.

The catalyst may be used such that an acidic compound or a basic compound (hereinafter referred to as the acidic catalyst, the basic catalyst, respectively) is directly added or is dissolved in a solvent such as water or an alcohol and added in the state of a solution. The catalyst concentration of the solution is not particularly limited, and may be appropriately selected in accordance with the properties of the acidic or basic compound, the desired amount of the catalyst, etc. When the concentration is high, the hydrolysis and polycondensation speed tends to be increased. When the basic catalyst is used at a high concentration, precipitates are generated in the sol liquid in some cases. Thus, the concentration of the basic catalyst is preferably such that it can be converted to a concentration in an aqueous solution of 1 N or less.

The type of the acidic or basic catalyst is not particularly limited, and in the case of using the catalyst at a high concentration, the catalyst is preferably composed of atoms that hardly remain in the resultant dried film. Specific examples of the acidic catalysts include hydrogen halides such as hydrochloric acid, nitric acid, sulfuric acid, sulfurous acid, hydrogen sulfide, perchloric acid, hydrogen peroxide, carbonic acid, carboxylic acids such as formic acid and acetic acid, substituted carboxylic acids provided by replacing R of RCOOH with another atom or substituent, and sulfonic acids such as benzenesulfonic acid. Specific examples of the basic catalysts include ammoniacal bases such as aqueous ammonia, and amines such as ethylamine and aniline.

The polymer coating liquid may be prepared by the processes of dissolving the hydrolyzable compound and the specific polymer having the reactive end group in a solvent such as ethanol, adding the catalyst, and stirring the obtained mixture. The reaction temperature is preferably within the range of room temperature to 80°C, and the reaction time, i.e. stirring time, is preferably 1 to 72 hours. The organic-inorganic complex sol liquid can be obtained by carrying out the stirring in this manner to promote the hydrolysis and polycondensation of the components.

The solvent used for preparing the polymer coating liquid composition containing the specific polymer and preferably containing the hydrolyzable compound is not particularly limited as long as the components can be uniformly dissolved or dispersed therein. For example, the solvent is preferably methanol, ethanol, or an aqueous solvent such as water.

As described above, in the invention, the sol-gel method is used for preparing the organic-inorganic complex sol liquid (the hydrophilic coating liquid composition) for forming the antifogging, antisoiling surface layer bonded to the glass surface. The sol-gel methods are described in detail in Sumio Sakka, Sol-Gel Ho no Kagaku, Agune Shofusha (1998), Seki Hirashima, Saishin Sol-Gel Ho ni Yoru Kinosei Hakumaku Sakusei Gijutsu, Sogo Gijutsu Center (1992), etc., and the methods described therein can be used for preparation of the polymer coating liquid composition according to the invention.

The method of applying the polymer coating liquid composition to the glass surface is not particularly limited, and may be a known method such as a dipping method, a spray method, a flow coating method, a spin coating method, or a printing method. The flow coating method can form a film having a thickness sufficient for achieving the functions with high productivity, and thereby is preferred.
The application amount of the polymer coating liquid composition may be appropriately selected in accordance with the purposes. In general, the amount is preferably 0.1 to 100 g/m², more preferably 1.0 to 10 g/m², based on the solid contents.

After the polymer coating liquid composition is applied to the glass surface in this manner, the polymer chain is bonded to the glass surface by inducing and promoting the sol-gel reaction.
In the sol-gel reaction, from the viewpoints of efficiently carrying out the reaction and preventing strength reduction due to thermal deterioration of the polymer film, the reaction temperature is preferably 50°C to 300°C, more preferably 70°C to 250°C, most preferably 100°C to 200°C. The reaction time is preferably 10 seconds to 4 hours, more preferably 30 seconds to 1 hour, most preferably 1 minute to 30 minutes.

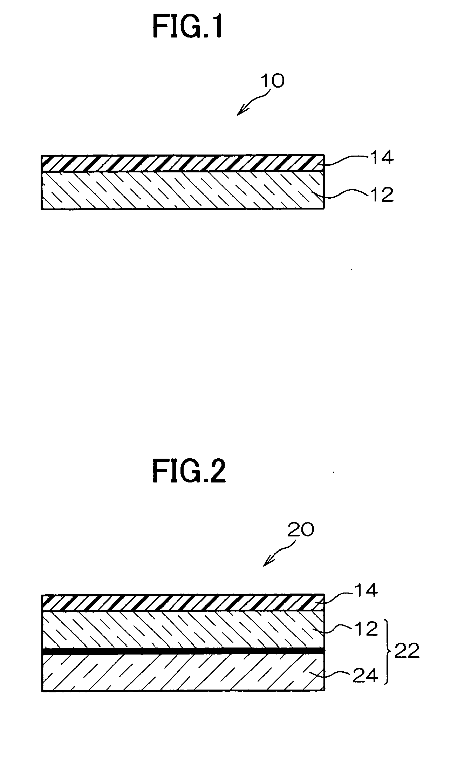

Fig. 1 is a cross-sectional view showing the structure of an example tempered glass 10 according to the invention produced in this manner. The surface antifogging, antisoiling, tempered glass 10 of the invention, which is obtained by chemically bonding the polymer chain represented by formula (I) to the surface of the glass formed by the float process or down draw process, has a polymer layer 14 formed by chemically bonding the specific polymer to the surface of the glass 12 formed by the float process or down draw process.

<Type and preferred examples of glass composition>
The glass used in the invention will be described below.
In general, glasses are classified according to component compositions into A) soda-lime glasses (soda glasses), B) borosilicate glasses, C) lead glasses, and D) other oxide glasses.
The A) soda-lime glasses can be easily formed and has excellent chemical durability, and the starting materials thereof can be easily available and are inexpensive, so that they have been used for glass sheets, bottle glasses, etc. The B) borosilicate glasses contain borax B₂O₃, and have been used for low-expansion glasses for touch panels, PYREX (trademark) for chemical experiment, and heat resistant glasses for mercury lamps and glass tubes. The C) lead glasses contain lead oxide, and have been used for crystal glasses, highly refractive glasses for optical lens, and radiation shielding glasses for cathode ray tubes. The D) other oxide glasses include aluminosilicate glasses excellent in waterproofness, borate glasses usable as solders for connecting glasses, and phosphate glasses usable for artificial bones, etc.
Among them, the A) soda-lime glass and the aluminosilicate glasses of the D) other oxide glasses can be preferably produced by the float process and the down draw process.
Particularly the aluminosilicate glasses are more excellent in scratch resistance as compared with common soda-lime glasses.

The glass used in the invention may be any one as long as it is produced by the float process or the down draw process. From the viewpoint of increasing scratch resistance, size accuracy, and smoothness of the tempered glass, soda-lime glasses or aluminosilicate glasses produced by the float process or the down draw process are preferably used as described above.

The preferred composition of the glass, which can be preferably produced by the float process or down draw process and can be preferably used in the invention, will be described below.
Preferred examples of such glasses include glasses described in WO94/0891 (PCT/FR93/01035), suitable for aircraft, having a composition (% by weight) containing 65.0 to 76.0% of SiO₂, 1.5 to 50% of Al₂O₃, 4.0 to 8.0% of MgO, 0.0 to 4.5% of CaO, 10.0 to 18.0% of Na₂O, 1.0 to 7.5% of K₂O, and 0.0 to 4.0% of B₂O₃;

aluminosilicate glasses described in JP-A No. 11-11988, suitable for laminated glass, having a composition containing 58 to 66% of SiO₂, 13 to 19% of Al₂O₃, 3 to 4.5% of Li₂O, 6 to 13% of Na₂O, 0 to 5% of K₂O, 10 to 18% of R₂O (in which R₂O = Li₂O + Na₂O + K₂O), 0 to 3.5% of MgO, 1 to 7% of CaO, 0 to 2% of SrO, 0 to 2% of BaO, 2 to 10% ofRO (in which RO = MgO + CaO + SrO + BaO), 0 to 2% of TiO₂, 0 to 2% of CeO₂, 0 to 2% of Fe₂O₃, and 0 to 1% of MnO (in which TiO₂ + CeO₂ + Fe₂O₃ + MnO = 0.01 to 3%); and

aluminosilicate glasses having a composition containing 60 to 66% of SiO₂, 15 to 18% of Al₂O₃, 3 to 4.5% of Li₂O, 7.5 to 12.5% of Na₂O, 0 to 2% of K₂O (in which Li₂O + Na₂O + K₂O = 11 to 17%), 0.5 to 3% of MgO, 2.5 to 6% of CaO, 0 to 2% of SrO, 0 to 2% of BaO (in which MgO + CaO + SrO + BaO = 3 to 9%), 0 to 2% of TiO₂, 0 to 2% of CeO₂, 0 to 2% of Fe₂O₃, and 0 to 1% of MnO (in which TiO₂ + CeO₂ + Fe₂O₃ + MnO = 0.01 to 3%).

The composition of the glass may be appropriately selected in accordance with the purposes of the tempered glass of the invention. The basis of the selection of the components is described below.
SiO₂ is an essential main component of the glass. In general, when the SiO₂ content is 58 to 66%, an excellent waterproofness is obtained and the viscosity of the glass melt is maintained at the appropriate level, so that the melting and shape forming steps can be performed with excellent workability. Thus, the SiO₂ content is preferably 58 to 66%, more preferably 60 to 66%.
Also Al₂O₃ is one of important components of the glass. Though the waterproofness is improved by adding Al₂O₃, the viscosity is increased when the Al₂O₃ amount is too large. In view of achieving a sufficient effect and preventing reduction of workability, the Al₂O₃ content is preferably 13 to 19%, more preferably 15 to 19%.

Li₂O acts to increase the solubility. When an excess amount of Li₂O is added, the waterproofness is deteriorated and the liquid phase temperature is increased, whereby it becomes difficult to form the glass. Thus, the LiO₂ content is preferably 3 to 4.5%.
Na₂O acts to increase the solubility. The Na₂O content is preferably 6 to 13%, more preferably 7.5 to 12.5%, from the viewpoint of hardening.
Also K₂O acts to increase the solubility. The K₂O content is preferably 5% or less, more preferably 2% or less.
All the 3 components act to increase the solubility, and thus the R₂O content, the total content of Li₂O, Na₂O, and K₂O, is preferably 9 to 18%, more preferably 10 to 17%.

MgO acts to increase the solubility. When an excess amount of MgO is added, the liquid phase temperature is increased, whereby it becomes difficult to form the glass. Thus, the MgO content is preferably 3.5% or less, more preferably 0.5 to 3%.
CaO has a function equal to that of MgO, and the CaO content is preferably 1 to 7%, more preferably 2.5 to 6%.
SrO and BaO are components for increasing the solubility and reducing the liquid phase temperature. However, as the density of the glass is increased, it causes material cost increase. Thus, the content of each of SrO and BaO is preferably 2% or less, more preferably 1% or less.
Further, the RO content, which means the total content of MgO, CaO, SrO, and BaO, is preferably 2 to 10%, more preferably 3 to 9%, from the viewpoints of maintaining the glass melt viscosity and the liquid phase temperature at the appropriate levels, and achieving excellent melting properties and forming properties.

In the glass melt, Fe₂O₃ is in the equilibrium state of Fe²⁺ and Fe³⁺, and the light transmittance, particularly the infrared light transmittance, of the melt is greatly affected by these ions. In a case where all iron is regarded as in the state of Fe₂O₃, when the Fe₂O₃ content is 2% or more, the absorption in the infrared region is excessively enhanced, and the temperature distribution of the glass cannot be controlled in the melting and forming processes, resulting in deterioration of qualities. Thus, the Fe₂O₃ content is preferably 2% or less.
TiO₂, CeO₂ and MnO effectively change the equilibrium state of Fe²⁺ and Fe³⁺, and interact therewith, to change the light transmittance. However, when the contents of these components are too large, the qualities of the glass material are deteriorated and the material costs are increased. Thus, the TiO₂ content is preferably 3% or less, more preferably 2% or less. Further, the CeO₂ content is preferably 2% or less, and the MnO content is preferably 1% or less.

The glass may contain another component in addition to the above ones as long as it does not deteriorate the desired properties, examples thereof including coloring agents such as NiO, Cr₂O₃, and CoO, and clarifying agents such as SO₃, As₂O₃, and Sb₂O₃.
SO₃ is derived from a sulfate salt used as the clarifying agent. In the case of using the sulfate salt as the clarifying agent, the clarifying effect can be obtained when the residual SO₃ content is 0.05% or more in the glass. When the residual amount is more than 0.5%, the clarifying effect is not improved, and the SOₓ content in exhaust gas is increased in the glass melting step, whereby such an amount is not preferred in view of environment. Thus, the content of SO₃ remaining in the glass is preferably 0.05% to 0.5%.
As₂O₃ and Sb₂O₃ are commonly used as the clarifying agent. It is preferred that the contents thereof are 1% or less from the viewpoint of their toxicity. Further, the contents are more preferably equal to or less than the amount of them mixed as impurities, i.e. 0.1% or less.
B₂O₃ ZnO, P₂O₅, PbO, etc. having high volatility corrode bricks in glass melting furnaces, and the volatiles are deposited on the ceiling of the furnace and fall onto the glass together with the bricks, whereby the components deteriorates the qualities of the glass. Thus, the contents of the components are preferably equal to or less than the amount of those mixed as impurities, i.e. 0.1% or less.

The glass base material for the surface antifogging, antisoiling, tempered glass of the invention is formed by the float process or the down draw process.
The glass sheet formed by the float process is excellent in smoothness, whereby aftertreatments such as grinding are not required. Further, the float process can provide a large glass sheet with low costs. In the glass shape forming step in the float process, a melted glass material is transported onto a melted tin bath, and spread and formed. Thus, the internal stress of the glass is well relaxed, whereby the glass prepared by the float process is less likely to be cracked as compared with glasses prepared by the other processes.
On the other hand, in the down draw process, air is used as a cooling medium to form a glass sheet. In the down draw process, noncontact forming is carried out, whereby there are no concerns about contamination of impurities from a mold, and a highly pure, thin glass sheet excellent in smoothness can be formed. Such a glass sheet can be suitably used for display devices such as liquid crystal display devices. The glass formation by the down draw process is described in detail in JP-A No.5-163032, JP-A No.2002-167226, etc., and glasses obtained by methods described therein can be preferably used in the invention.

In view of melting a high quality glass, the melting temperature of the glass, at which the glass has a viscosity of 10² poise, is preferably 1,550°C or lower, more preferably 1,540°C or lower. In a case where a glass composition is prepared by the float process to obtain a high-flatness sheet, it is preferred that the operation temperature, at which the glass has a viscosity of 10⁴ poise, is 1,100°C or lower, and the liquid phase temperature is equal to or less than the operation temperature. It is more preferred that the operation temperature is 1,055°C or lower and the liquid phase temperature is equal to or less than the operation temperature.

Particularly in the case of using the aluminosilicate glass or soda-lime glass produced by the float process or down draw process, the glass can be firmly bonded to the polymer chain by the above sol-gel method to form the polymer hybrid film.
The reasons for the firm bond are that the glass with high surface smoothness can be provided by the float process and down draw process and thus the coating liquid can be applied to the glass uniformly in the sol-gel process, and that the composition ratio and the crystalline structure of the obtained aluminosilicate glass and soda-lime glass are such that the density and activity of the surface silanol groups and the actual sol-gel reaction efficiency are high.

The glass obtained in the above manner can be singly used as the glass base material of the tempered glass of the invention, and in this case the tempered glass can be used for antifogging window glasses, vehicle glasses, mirrors, etc. The glass base material is not limited thereto, and there are no restrictions on the glass base material as long as the material has a surface of the glass formed by the float process or down draw process, to which the polymer chain is introduced. The glass base material may be a layered glass containing a plurality of layers, a laminated glass containing 2 glass sheets and a resin film sandwiched therebetween, etc.

Thus, not only the monolayer glasses but also multilayer glasses (including simple layered glasses, laminated glass having functional films, etc. between glass sheets, and layered glasses having vacuum spaces) can be used as the glass base material for automobiles and architectural structures.
Further, film-attached glasses, which have functional films attached to the glass surfaces in view of security, have recently been known, and they can be used as the glass base material.
Laminated glass windows have been used for transparent openings that require safety properties, such as windows of automobiles, trains, aircrafts, etc. and windows of architectural structures.

The basic structure of the laminated glass window is such that a thermoplastic resin such as a widely-used polyvinyl butyral sheet is sandwiched between transparent sheets such as glass sheets. A functional film may be incorporated between the sheets to obtain a laminated glass window having a further function. For example, a film excellent in mechanical strength may be incorporated to increase the safety, a film having a transparent conducting layer may be incorporated to prevent dew condensation, and a film having a selective light transmittance, through which visible ray can pass and near-infrared ray can hardly pass, may be incorporated.

The functional film may not be disposed between thermoplastic resin layers, and the functional film may be directly attached to one of the transparent glass sheets by an adhesive layer and a thermoplastic resin layer may be formed on the other surface of the functional film. Further, the laminated glass may be formed after a glass is subjected to vapor deposition or surface coating to obtain the selective light transmittance function.

Also in the field of such laminated glass, the properties of antifogging in rain (the properties of preventing visibility deterioration due to fogging), the properties of antisoiling for maintaining comfort (the properties of self cleaning), and the durabilities thereof (the scratch resistance) have been attracting much attention as novel properties.
Automobile windshields that need to have safety properties are obliged to have a visible light transmittance of 70% or more under law. Common automobile windshields have functions of UV protection, infrared protection, etc., and their visible light transmittances approach to 70%. Therefore, the antifogging and antisoiling functions cannot be achieved by reducing the transmitted light quantities. The same is true in the glasses for display devices, which have to be high in transparency.

By using the tempered glass of the invention for such laminated glass, a highly antifogging and antisoiling surface can be obtained without deteriorating the functions of the laminated glass.

Fig. 2 is a cross-sectional view showing an example of the structure of a tempered glass 20 according to the invention using a stack of 2 glass sheets as the glass material.
The 2-layered glass 22 is provided by stacking a lower glass 24 and a glass 12 formed by the float process or down draw process. The tempered glass 20 has a polymer layer 14, which is formed by chemically bonding the specific polymer to the upper surface of the glass 12 formed by the float process or down draw process.

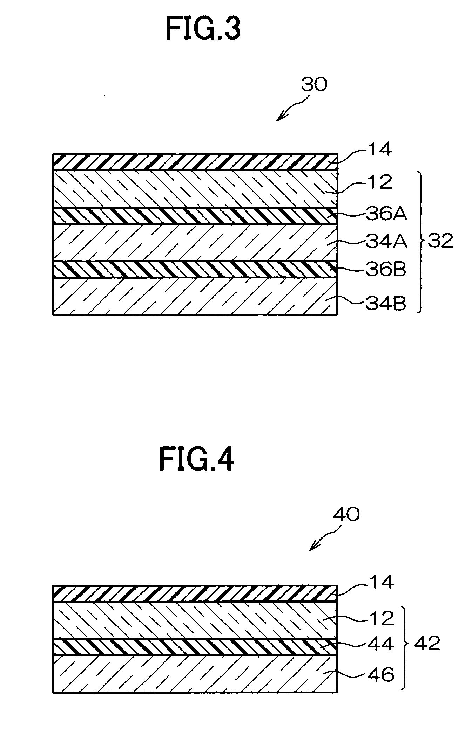

Fig. 3 is a cross-sectional view showing an example of the structure of a tempered glass 30 according to the invention using a laminated glass as the glass material. A laminated glass 32 has a glass 12 formed by the float process or down draw process, a lower glass 34A, and a glass sheet 34B disposed below the lower glass 34A, and functional resin layers 36A, 36B therebetween. In this embodiment, the laminated glass 32 has 3 glass sheets and 2 resin layers. Also in this embodiment, the tempered glass 30 has a polymer layer 14, which is formed by chemically bonding the specific polymer to the upper surface of the glass 12 formed by the float process or down draw process.

The production methods and details of the laminated glass usable in the tempered glass of the invention will be described below.
The laminated glass is such that a resin film is incorporated between 2 glass sheets. A functional resin film and a thermoplastic resin layer to be hereinafter described in detail are selected in accordance with the purposes and stacked beforehand to produce the laminated glass. The stack requires careful storage and handling because the thermoplastic resin layer has hygroscopicity and heat stretching properties and the functional film may be peeled off from the thermoplastic resin layer. Particularly in the case of using a polyvinyl butyral sheet as the thermoplastic resin to form a stack having a functional film, greater care should be taken when the stack is stored or handled. When the stack which has been deformed or peeled in storage is used for producing the laminated glass, concave and convex spots may be generated in the laminate in some cases.

The laminated glass is generally produced by sandwiching the stack of the functional film and the polyvinyl butyral sheet between two glasses, and by bonding them under heat and pressure. It is important to increase the adhesive force between the functional film and the polyvinyl butyral sheet as described above, and also it is important to increase the adhesion to the glass from the viewpoint of impact resistance related to the laminated glass safety.

The functional resin film for the laminated glass may be a transparent film or a sheet composed of the following polymer resin.
Examples of the polymer resins include polyester resins such as polyethylene terephthalate, polyethylene-2,6-naphthalene dicarboxylate, and polybutylene terephthalate, polycarbonate resins, polyketones, polyolefin resins such as polyethylene and polypropylene, polyvinyl chloride, polysulfone, polyphenylene oxide, polymethacrylates, polyacrylates, polystyrene, polyamide resins, polyimide resins, cellophanes, and cellulose resins such as cellulose triacetate.
Among them, biaxially stretched films of polyethylene terephthalate (PET) and polyethylene-2,6-naphthalene dicarboxylate (PEN) are most preferred because of their excellent size stability, transparency, smoothness, and mechanical properties.

To absorb or reflect an ultraviolet ray or an infrared ray, the surface is preferably coated with a highly refractive or high absorption substance such as a metal, a metal-containing compound, or an organic compound. It is preferred from the viewpoints of costs, durability, etc. that the metal or the metal-containing compound is used as the substance. Examples of the metal-containing compounds include metal oxides, metal nitrides, metal carbides, metal ion salts, and organic metal complexes. Preferred examples of the metal atoms of the metal or metal-containing compound include noble metals such as Ag, chemically stable Group 4A atoms of the Periodic Table of Elements such as titanium, zirconium, and hafnium, and Group 6A atoms such as chromium, and further include copper, nickel, vanadium, tantalum, and cerium.

The refractive index of the high-refractive substance is preferably 1.4 to 2.1, more preferably 1.8 to 2.1. The molar absorbance coefficient of the high absorption substance is preferably 1,000 to 200,000, more preferably 10,000 to 200,000.
It is preferred also that the glass is surface-coated directly with the metal or the metal compound by a known method such as a sputtering method, an arc deposition method, or an ion plating method.

A further functional material may be added to the laminated glass enclosing the film or the tempered glass having the film on the surface, and examples of the functional materials include selective light transmitting materials such as ultraviolet absorption materials, ultraviolet reflecting materials, infrared absorption materials, and infrared reflecting materials, and low-reflect antidazzle materials, sound insulating materials, conductive materials, dielectric materials, and impact resistant materials (materials for increasing adhesion between the glass and the resin intermediate layer).
The above materials may be used in the state of a single compound or a mixture with a polymer. The material is preferably introduced by (1) forming a film containing the functional compound or mixture and stacking the film, (2) vapor-depositing the functional compound onto the glass, or (3) applying or introducing a liquid paste containing the functional compound or mixture and fixing the paste under light, heat, or pressure.

Specific examples of the conductive or selective light transmitting materials are described below.
Examples of the conductive materials include thin films of indium oxide and tin oxide, thin films of tin oxide, and thin films of metals such as gold, silver, copper, and aluminium. Examples of the selective light transmitting materials, through which invisible infrared ray in solar light hardly passes, include thin films of gold, silver, copper, aluminium, nickel, palladium, tin, alloys thereof, and mixtures thereof, materials prepared by stacking dielectric substances on one or both surfaces of the metal thin films, and materials prepared by stacking the metal thin films repeatedly. Examples of the dielectric substances include titanium oxide, bismuth oxide, zinc sulfide, tungsten oxide, indium oxide, zirconium oxide, and silicon oxide.

The functional film preferably contains polyvinyl butyral, etc. to increase the adhesion to the glass. Further, in the case of stacking the functional film and polyvinyl butyral, etc., an adhesion layer of metal oxide derived from metal alcoholate by hydrolysis may be formed between them.

Examples of the metal oxides include the above-mentioned, selectively light transmitting, dielectric substances, i.e. oxides of titanium, bismuth, tungsten, indium, zirconium, and silicon. The adhesion layer needs to show excellent adhesion to polyvinyl butyral sheet, etc. in addition to transparency, resistance (against heat, light, water, etc.), workability, etc., and the above metal oxide sufficiently has these properties. Further, the metal oxide per se has no adhesion properties, and thereby is excellent in handling in and after the step of forming the metal oxide layer on the functional film.

The above metal oxide is generated by hydrolysis of a metal alcoholate as described above, and examples of the metal alcoholates include alkyl titanates, alkyl zirconates, and alkyl silicates. Specific examples of the alkyl titanates include tetra-i-propoxytitanium, tetra-n-butoxytitanium, tetrakis(2-ethylhexoxy)titanium, di-i-propoxy-bis(acetylacetonato)titanium, and dihydroxy-bis(lactato)titaniurn. Specific examples of the alkyl zirconates and the alkyl silicates include compounds corresponding to the alkyl titanates. The alkyl titanate, alkyl zirconate, or alkyl silicate, etc. is preferably a monomer, or a multimer such as a dimer or a tetramer. The titanium or zirconate oxide film obtained by hydrolyzing the monomer, dimer, or tetramer of tetra-n-butoxytitanium, tetra-n-butoxyzirconate, etc. is particularly preferably excellent in adhesion to the polyvinyl butyral sheet.

The polyvinyl butyral sheet, which is stacked on the functional film, preferably contains a plasticizer, a thermal stabilizer, an ultraviolet absorber, a coloring agent, etc., which can be thermoplastically worked in principle. In general, the polyvinyl butyral sheet formed thermoplastically contains a large amount of the plasticizer. In the polyvinyl butyral sheet for forming the laminated glass or the attached glass, the plasticizer content is generally 10 to 60% by weight, preferably 20 to 40% by weight. The plasticizer may be a phthalic ester such as dioctyl phthalate, a diethyleneglycol ester, a triethyleneglycol ester such as triethyleneglycol-di-2-ethyl butyrate, etc.

The thickness of the sheet is 0.10 to 1.50 mm, preferably 0.30 to 0.80 mm. The smoothness of the surface of the sheet, which comes into contact with the functional film, is 5 µm or less, preferably 2 µm or less. The smoothness is measured by a surface shape measuring apparatus to be hereinafter described. The surface smoothness is required for improving the storability of the laminated glass or the film-attached layered glass for window, an object of the invention, and further is important for producing a laminated glass window without concave and convex spots.

The entire surface of the polyvinyl butyral sheet completely adheres to the functional film, whereby the smoothness of the boundary is not deteriorated even in the step of lamination under heat and pressure, and a uniform laminated glass or film-attached layered glass can be obtained without concave and convex spots.
The other surface of the polyvinyl butyral sheet, which is not in contact with the functional film, is brought into contact with a plate of a glass or rigid plastic and bonded thereto in the lamination step. In this step, the other surface or the plate generally has an embossed shape of 30 to 100 µm for so-called air removal.

The above-described stack of the functional film and the polyvinyl butyral has a remarkably large adhesive force, and it is difficult to separate them. When the stack is stored, handled, or used for a laminated glass or a film-attached surface glass window, the functional film is not peeled off even in the case of breaking the stack.

The laminated glass may be produced by the steps of incorporating the stack of the polyvinyl butyral sheet, the functional film, and the polyvinyl butyral sheet, etc. between 2 transparent glass sheets, putting the components in a vacuum bag, and applying light, heat, and/or pressure. The laminated glass can be used for safety glass windows of automobiles or architectural structures. Further, the laminated glass may be produced by the steps of attaching a stack of the polyvinyl butyral sheet and the functional film to a transparent glass sheet, putting the components in a vacuum bag, and applying light, heat, and/or pressure, whereby the laminated glass can be used for automobile windshields.

In this case, the polyvinyl butyral sheet is sandwiched between the transparent glass sheet and the functional film.
In the above stack, the surface of the polyvinyl butyral sheet, which is not in contact with the functional film, generally has a roughness of 30 to 100 µm. The surface may be coated with a mold release film to prevent adhesion between the polyvinyl butyral sheets or dust adherence.

As described above, the tempered glass of the invention has the glass formed by the float process or down draw process on the outermost surface, can be produced from various glass base materials, and has a surface excellent in the antifogging properties, the antisoiling properties, and the scratch resistance.

The tempered glass of the invention has excellent antifogging and antisoiling properties and surface scratch resistance, and thus can be applied to various uses and can be used for window glasses of aircrafts and vehicles such as automobiles and trains, and window glasses of architectural structures, highly transparent glasses for display devices, mirrors and curved mirrors that are not fogged even under high humidity, etc.

### EXAMPLES

The present invention will be descriebd in detail below with reference to Examples without intention of restricting the scope of the invention.

<Synthesis Example 1: synthesis of specific polymer (1)>
50 g of acrylamide, 3.4 g of mercaptopropyltrimethoxysilane, and 220 g of dimethylacetamide were added to a 500-ml, 3-necked flask, and 0.5 g of 2,2-azobis(2,4-dimethylvaleronitrile) was added thereto at 65°C under nitrogen flow. The mixture was maintained at the constant temperature for 6 hours while stirring, and then cooled to the room temperature. The mixture was added to 2 L of ethyl acetate, and the precipitated solid was isolated by filtration and water-washed to obtain a specific polymer (1). The dry weight of the product was 52.4 g. As a result of a GPC measurement (polystyrene standard), the polymer had a weight average molecular weight of 3,000. Further, it was confirmed by a ¹³C-NMR (DMSO-d₆) analysis that the polymer was Example Compound II-1, in which a trimethoxysilyl group (50.0 ppm) was introduced to the end.

<Synthesis Example 2>
A specific polymer (2) was produced in the same manner as Synthesis Example 1 except for using the following compound (4.4 g) instead of mercaptopropyltrimethoxysilane (3.4 g). The dry weight of the product was 13.0 g. As a result of a GPC measurement (polystyrene standard), the polymer had a weight average molecular weight of 3,000. Further, it was confirmed by a ¹³C-NMR (DMSO-d₆) analysis that the polymer was Example Compound II-2, in which a trimethoxysilyl group (50.0 ppm) was introduced to the end.

**(CH₃O)₃Si-CH₂CH₂NHCOCH₂CH₂SH**

Examples 1 to 12
<Preparation of polymer coating liquid composition (sol-gel liquid)>
The following components were uniformly mixed, and stirred at 20°C for 2 hours to carry out hydrolysis, whereby a polymer coating liquid composition sol was obtained.

| | |
|---|---|
| Specific polymer (compound shown in Table 1) | 0.21 g |
| Tetramethoxysilane (hydrolyzable compound) | 0.62 g |
| Ethanol | 4.7 g |
| Water | 4.7 g |
| 1-N aqueous nitric acid (catalyst) | 0.1 g |

<Bonding of polymer chain to glass base material surface>
Each base material shown in Table 1 was used for glass sheet, and the above polymer coating liquid composition was applied to a surface of the material such that the amount of the applied composition was 2 g/m² after drying. The composition was heat-dried at 100°C for 10 minutes, whereby the polymer chain was chemically bonded to the glass base material surface, to obtain surface antifogging, antisoiling, tempered glasses of Examples 1 to 12 respectively.

Comparative Examples 1 to 4
Surface antifogging, antisoiling, tempered glass of Comparative Examples 1 to 4 were produced in the same manner as Examples 1 to 12 except for using base materials shown in Table 1 for glass sheets, respectively.

<Evaluation method>
Thus-obtained, surface antifogging, antisoiling, tempered glasses of Examples 1 to 12 and Comparative Examples 1 to 4 were evaluated by the following methods. The results are shown in Table 1.

### 1. Transparency

A green signal at 100 m distant was visually observed through each of the tempered glasses of Examples 1 to 12 under natural sunlight in the open air in the daytime on a sunny day. The transparency was evaluated by the following 3 standards as compared with the base material glass sheet.
A: No change was observed as compared with the surface untreated base material.
B: Signal was slightly hard to observe as compared with the surface untreated base material.
C: Signal was clearly hard to observe as compared with the surface untreated base material.

### 2. Antifogging properties

Each of the above-obtained tempered glasses of Examples 1 to 12 and Comparative Examples 1 to 4 was exposed to water vapor for 1 minute under a fluorescent light in a room in the daytime, and then was separated from the water vapor. The glass was placed under conditions of 25°C and RH10%, and the fogging of the glass and the change thereof were evaluated by the following 3 standards under the same fluorescent light.
A: Fogging was not observed.
B: Fogging was observed, but disappeared within 10 seconds.
C: Fogging was observed, and did not disappear within 10 seconds.

### 3. Antisoiling properties

A line was made by an oil ink (an oil marker available from Mitsubishi Pencil Co., Ltd.) on the surface of each tempered glass of Examples 1 to 12 and Comparative Examples 1 to 4. Water was thrown on the line, and running down of the ink was evaluated by the following 3 standards.
A: Ink was removed within 1 minute.
B: Ink was removed after 1 minute or more.
C: Ink was not removed even by throwing water for 10 minutes.

### 4. Scratch resistance evaluation

Load was applied to each obtained tempered glass by a scratch hardness meter using a 1-mm diameter sapphire stylus (manufactured by Shinto Scientific Co., Ltd.) while increasing the load by 5 g. The load, at which the tempered glass was scratched, was evaluated by the following 3 standards.
A: Load at which the tempered glass was scratched was 100 g or more.
B: Load at which the tempered glass was scratched was 10 to 100 g.
C: Load at which the tempered glass was scratched was less than 10 g.

### 5. Impact resistance evaluation (stone impact test)

A sample of each obtained tempered glass having a size of a window in a railway vehicle was prepared. The prepared sample was a laminated glass 40 for the vehicle having such a layer structure shown in Fig. 4 that a glass 12 having a polymer layer 14 on the surface was positioned on the outside of a vehicle laminated glass 42, an unstrengthened soda-lime silicate glass sheet 46 (thickness 2 mm) formed by a float process was positioned on the inside thereof, and an intermediate film 44 of polyvinyl butyral was positioned therebetween.

A stone impact test was carried out such that small stones having a weight of about 2 g were made to impact 30 parts of each laminated glass sample by an air gun at an impact speed of 90 km/h at an impact incident angle of 0 degree. The test was designed for using the glass in windshields of vehicles.

The impact resistance was evaluated using the following standards by counting the defects, which were scratches of 4 mm long or more and cracked portions, considered as exchanging basis.
A: There are less than 15 defects.
B: There are 15 to 25 defects.
C: There are at least 26 defects.

**Table 1**

| | Glass base material | | Specific Poymer | Evaluation results | | | |
|---|---|---|---|---|---|---|---|
| | Type of glass | Forming process | | Trans- parency | Antifogging properties | Antisoiling properties | Scratch resistance |
| Example 1 | Soda lime | Float process | I-1 | A | A | A | B |
| Example 2 | Soda lime | Float process | I-7 | A | A | A | B |
| Example 3 | Soda lime | Float process | II-1 | A | A | A | A |
| Example 4 | Soda lime | process | II-10 | A | A | A | A |
| Example 5 | Soda lime | Float process | II-13 | A | A | A | A |
| Example 6 | Soda lime | Down draw process | I-1 | A | A | A | A |
| Example 7 | Soda lime | Down draw process | I -7 | A | A | A | A |
| Comparative Example 1 | Soda lime | Fourcourt process | I-1 | B | A | B | C |
| Comparative Example 2 | Soda lime | Colburn process | I-1 | B | A | B | C |
| Example 8 | Alumino- | Float process | I-2 | A | A | A | B |
| Example 9 | Alumino- | Float process | I-20 | A | A | A | B |
| Example 10 | Aluminosilicate | Float process | II-1 | A | A | A | A |
| Example 11 | Aluminosilicate | Float process | II-9 | A | A | A | A |
| Example 12 | Aluminosilicate | Float process | II-15 | A | A | A | A |
| Comparative Example 4 | Aluminosilicate | Fourcourt process | II-1 | B | A | B | C |
| Comparative Example 4 | Aluminosilicate | Colburn process | II-1 | B | A | B | C |

It was clear from Table 1 that the tempered glasses produced by the method of the invention had high transparency, high antifogging and antisoiling properties, and excellent scratch resistance and impact resistance. On the other hand, the glasses of Comparative Examples 1 to 4, which were formed by processes other than the float process and down draw process, showed insufficient scratch resistance even when the polymer chains were bonded in the same manner as Examples.

Examples 13 and 14 Tempered glasses of Examples 13 and 14 were produced in the same manner as Examples 1 to 12 except for using the glass base material and the specific polymer shown in Table 2 respectively.

### Comparative Examples 5 and 8

### <Surface treatment A: polysiloxane coating>

Tempered glasses having surfaces coated with siloxane of Comparative Examples 5 and 8 were produced by using the glass base materials shown in Table 2 and by performing the following treatment (the surface treatment A), respectively.

### <Synthesis Example: synthesis of material having aliphatic, unsaturated hydrocarbon group>

To a 3-L, 4-necked flask equipped with a stirrer, a thermometer, and a water cooling condenser were added 178 g of methyltriethoxysilane, 148 g ofvinyltrimethoxysilane, 250 g of isobutyl alcohol, 250 g of diacetone alcohol, 10 g of aluminium acetylacetonate, 1 g of ammonium perchlorate, and 1,200 g of a 20% aqueous silica sol SNOWTEX A (tradename) available from Nissan Chemical Industries, Ltd. in this order. The components were reacted at 40°C for 3 hours. The obtained vinyl-containing compound solution was used as a treatment agent a-1.

### <Preparation of hydrosilyl-containing siloxane solution>

2 g of hydrosilyl-containing dimethylpolysiloxane represented by formula (A), 0.1 g of a platinum catalyst CAT-PL-50T (tradename) available from Shin-Etsu Chemical Co., Ltd., and 98 g of decamethylcyclopentasiloxane were mixed to obtain a treatment agent b-1.

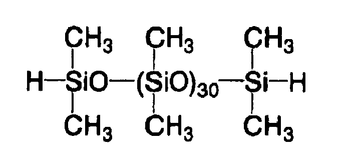

First the treatment agent a-1 prepared in Synthesis Example was applied by a flow coating method to a glass base material shown in Table 2, and was thermally hardened at 130°C for 1 hour. Then, the base material coated with the hardened treatment agent a-1 was further flow-coated with the above produced treatment agent b-1, and the resultant was heated at 100°C for 1 hour. The resulting material was wiped with tissue paper moistened with ethanol and dried at the room temperature for 1 hour, and thus a surface siloxane treatment was carried out to obtain a surface treatment glass of Comparative Example 5.

[Comparative Examples 6 and 9]
<Surface treatment B: fine fluororesin particle coating>
First 16 g of tetraethoxysilane (Si(OC₂H₅)₄: TEOS), 68.5 g of ethanol (EtOH), and 5.5 g of an aqueous HCl controlled at pH 4 are weighed and put on a surface of a glass base material shown in Table 2, and then are refluxed under heating at about 80°C for approximately 4 hours, to obtain a silica sol liquid.
A fluororesin particle suspension NEOFLONE ND-1 (tradename) available from Daikin Industries, Ltd. is added to and mixed with the silica sol liquid to obtain a first liquid such that the weight ratio of the fluororesin in the liquid to the solid contents of the silica sol having an average molecular weight of about 3,000 is approximately 80% by weight. Then the first liquid is diluted with ethyleneglycol monoethylether such that the total solid content is about 3% by weight, to obtain a second liquid.
Then, a coating liquid of the second liquid was applied to a surface of a glass base material, and heated at approximately 620°C for about 10 minutes to form an SiO₂ thin film having a thickness of approximately 0.1 µm, whereby surface-treated glasses of Comparative Examples 6 and 9 were obtained.

Comparative Examples 7 and 10
<Surface treatment C: titanium oxide photocatalyst coating>
60.3 g (0.6 mol) of acetylacetone (AcAc) was added dropwise to 285.6 g (0.3 mol) of titanium tetraisopropoxide (Ti(OPr)₄) by using a burette while stirring, and the mixture was stirred for about 1 hour to obtain a solution (a) (150 mL) of a stable Ti(AcAc)₂(OPr)₂ complex.
The solution (a) was used to form a thin film on a glass base material shown in Table 2 by a dipping method at a base material pulling speed of 3.8 cm/min. The resultant was left and dried in the air for about 30 minutes, and burned at 500°C for 30 minutes, to obtain surface treatment glasses of Comparative Examples 7 and 10.
As a result of thickness analysis using a scanning electron microscope with a measurement accuracy of about 10%, the thickness was about 70 nm. As a result of an X-ray diffraction measurement, it was found that the formed film had an anatase titanium oxide structure.

<Performance evaluation>
The tempered glasses of Examples 13 and 14, and Comparative Examples 5 to 10 were evaluated in the same manner as Examples 1 to 12. The results are shown in Table 2.

**Table 2**

| | Glass base material | | Surface treatment | Evaluation results | | | |
|---|---|---|---|---|---|---|---|
| | Type of glass | Forming process | | Transparency | Antifogging properties | Antisoiling properties | Scratch resistance |
| Example 13 | Soda lime | Float process | Sol-gel treatment of the invention with specific polymer II-3 | A | A | A | A |
| Comparative Example 5 | Soda lime | Float process | Comparative treatment A | A | B | C | B |
| Comparative Example 6 | Soda lime | Float process | Comparative treatment B | A | C | C | B |
| Comparative Example 7 | Soda lime | Float process | Comparative treatment C | A | B | B | C |
| Example 14 | Aluminosilicate | Float process | Sol-gel treatment of the invention with specific polymer II-3 | A | A | A | A |
| Comparative Example 8 | Aluminosilicate | Float process | Comparative treatment A | A | B | C | B |
| Comparative Example 9 | Aluminosilicate | Float process | Comparative treatment B | A | C | C | A |
| Comparative Example 10 | Aluminosilicate | Float process | Comparative treatment C | A | B | B | C |

As is clear from Table 2, the tempered glasses of Examples 13 and 14 obtained by the sol-gel treatment according to the invention had high transparency, high antifogging and antisoiling properties, and excellent scratch resistance. On the other hand, the surface-treated glasses of Comparative Examples 5 to 10, which were made hydrophilic or water-repellent by methods other than that of the invention, showed lower antifogging properties, antisoiling properties, and scratch resistance as compared with Examples even when the smooth glass base material formed by the float process.

Example 15
A tempered glass of Example 15 was produced in the same manner as Example 13 except for using a layered glass of 2 glass sheets shown in Table 3 to chemically bond a polymer chain to a surface of an upper layer of an aluminosilicate glass.

### Example 16

An ST type polyvinyl butyral (PVB) sheet having a thickness of 0.38 mm (available from Sekisui Chemical Co., Ltd.) was prepared, and a surface of the PVB, which is brought into contact with the functional film, was smoothed. The smoothing was carried out such that a template film having a PET base material coated with a silicon resin (thickness 38 µm) was put on a surface of the PVB and formed at 120°C for 30 minutes under a pressure of 50 g/cm².
The smoothed surface had a roughness of 1.5 µm or less, and the other surface had an embossed shape and a roughness of 50 µm.
A biaxially stretched PET having a thickness of 100 µm was used as the functional film for improving impact resistance.
By using this laminated glass, a tempered glass of Example 16 was produced by chemically bonding a polymer chain to the uppermost layer of the aluminosilicate glass in the same manner as Example 13.

### Comparative Examples 11 and 12

Tempered glasses of Comparative Examples 11 and 12 were produced in the same manner as Examples 15 and 16 except for not treated the layered glass and the laminated glass with the specific polymer treatment according to the invention, respectively.
The tempered glasses of Examples 15 and 16, and Comparative Examples 11 and 12 were evaluated in the same manner as Examples 1 to 12. The results are shown in Table 3.

**Table 3**

| | Glass base material | | Surface treatment | Evaluation results | | | |
|---|---|---|---|---|---|---|---|
| | Type of glass | Forming process | | Transparency | Antifogging properties | Antisoiling properties | Scratch resistance |
| Example 15 | Layerd glass of upper layer of aluminosilicate and lower layer of soda lime | Float process | Sol-gel treatment of the invention with specific polymer II-3 | A | A | A | B |
| Comparative Example 11 | Layerd glass of upper layer of aluminosilicate and lower layer of soda lime | Float process | Untreated | A | C | C | C |
| Example 16 | Laminated glass of upper layer of aluminosilicate, intermediate layer of PET & PVB, and lower layer of soda lime | Float process | Sol-gel treatment of the invention with specific polymer II-3 | A | A | A | A |
| Comparative Example 12 | Laminated glass of upper layer of aluminosilicate, intermediate layer of PET & PVB, and lower layer of soda lime | Float process | Untreated | A | C | C | B |

It was clear from Table 3 that the glass materials obtained by the sol-gel treatment of the invention could be preferably applied to the layered glass or laminated glass, and showed high transparency, high antifogging and antisoiling properties, and excellent impact resistance. By comparing Example 15 with Comparative Example 11 and comparing Example 16 with Comparative Example 12, it was found that the tempered glasses obtained by the method of the invention showed improved surface scratch resistance while maintaining the properties of the layered glass and laminated glass, thereby achieving further increased strength.

As described in detail above, according to the present invention, there is provided the tempered glass excellent in the surface antifogging properties, antisoiling properties, and scratch resistance without light irradiation, etc.
Further, such a tempered glass excellent in the surface antifogging properties, antisoiling properties, and scratch resistance can be easily produced by the simple chemical treatment following the glass production in the method of the invention.

The foregoing description of the embodiments of the present invention has been provided for the purposes of illustration and description. It is not intended to be exhaustive or to limit the invention to precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.
All publications, patent applications, and technical standards mentioned in this specification are herein incorporated by reference to the same extent as if each individual publication, patent application, or technical standard was specifically and individually indication to be incorporated by reference.

## Claims

1. A surface antifogging, antisoiling, tempered glass comprising a glass formed by a float process or a down draw process, the glass being chemically bonded to a polymer chain represented by formula (I): 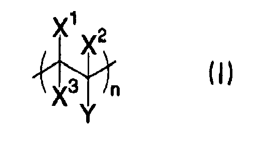 wherein X¹ to X³ each independently represent a hydrogen atom, a hydrocarbon group having 1 to 10 carbon atoms, or -CO₂R¹, R¹ represents a hydrogen atom, an alkaline metal, or a hydrocarbon group having 1 to 10 carbon atoms, 2 or more of X¹ to X³ may be bonded together to form a ring structure; Y represents a functional group having a molecular weight of 100,000 or less containing at least one group selected from the group consisting of -NHSO₂R², -NHCOR², -SO₂NHR³, -CONHR³, -CO₂R¹, -SO₃R¹, -PO₃R¹₂, -OR³, -Si(OR³)₃, and -CF₃, R¹ has the same meanings as above, R² represents a hydrocarbon group having 1 to 10 carbon atoms, R³ represents a hydrogen atom or a hydrocarbon group having 1 to 10 carbon atoms, and n represents a repeating unit number of 10 to 5,000; wherein the polymer chain represented by formula (I) may be a copolymer chain comprising different structural units of the formula (I), and the glass is bonded to the polymer chain represented by formula (I) by a chemical bond formed between a surface of the glass and a group provided by removing at least 1 atom from Y or between the glass surface and an end of the polymer chain.

2. The surface antifogging, antisoiling, tempered glass of claim 1, wherein the polymer chain represented by formula (I) is chemically bonded to the glass surface such that an end bondable polymer represented by formula (II) is chemically bonded by a sol-gel method to the glass surface: 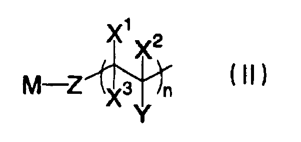 wherein X¹ to X³ each independently represent a hydrogen atom, a hydrocarbon group having 1 to 10 carbon atoms, or -CO₂R¹, R¹ represents a hydrogen atom, an alkaline metal, or a hydrocarbon group having 1 to 10 carbon atoms, 2 or more of X¹ to X³ may be bonded together to form a ring structure; Y represents a functional group having a molecular weight of 100,000 or less containing at least one group selected from the group consisting of -NHSO₂R², -NHCOR², -SO₂NHR³, -CONHR³, -CO₂R¹, -SO₃R¹, -PO₃R¹₂, -OR³, -Si(OR³)₃, and -CF₃, R¹ has the same meanings as above, R² represents a hydrocarbon group having 1 to 10 carbon atoms, R³ represents a hydrogen atom or a hydrocarbon group having 1 to 10 carbon atoms, and n represents a repeating unit number of 10 to 5,000; Z represents a divalent linking group containing an atom selected from C, H, N, O, and S; M represents -Si(OR¹)₃, -Ti(OR¹)₃, -Al(OR¹)₂, or -Zr(OR¹)₃.

3. The surface antifogging, antisoiling, tempered glass of claim 2, wherein the glass formed by a float process or a down draw process is a layered glass comprising two glass sheets formed by a float process or a down draw process.

4. The surface antifogging, antisoiling, tempered glass of claim 2, wherein the glass formed by the float process or the down draw process is a laminated glass formed by sandwiching an intermediate resin layer between two glass sheets formed by the float process or the down draw process.

5. The surface antifogging, antisoiling, tempered glass of claim 4, wherein the intermediate resin layer is a thermoplastic resin layer.

6. The surface antifogging, antisoiling, tempered glass of claim 2, wherein the glass is formed by the float process, and the tempered glass is used for a vehicle or architectural structure.

7. The surface antifogging, antisoiling, tempered glass of claim 2, wherein the glass is formed by the down draw process, and the tempered glass is used for a display device.

8. The surface antifogging, antisoiling, tempered glass of claim 3, wherein the glass is formed by the float process, and the tempered glass is used for a vehicle or architectural structure.

9. The surface antifogging, antisoiling, tempered glass of claim 3, wherein the glass is formed by the down draw process, and the tempered glass is used for a display device.

10. The surface antifogging, antisoiling, tempered glass of claim 4, wherein the glass is formed by the float process, and the tempered glass is used for a vehicle or architectural structure.

11. The surface antifogging, antisoiling, tempered glass of claim 4, wherein the glass is formed by the down draw process, and the tempered glass is used for a display device.

12. The surface antifogging, antisoiling, tempered glass of claim 2, wherein the glass is a soda-lime glass.

13. The surface antifogging, antisoiling, tempered glass of claim 2, wherein the glass is an aluminosilicate glass.

14. A method for producing a surface antifogging, antisoiling, tempered glass, comprising: preparing a glass formed by a float process or a down draw process; applying a coating liquid including an end bondable polymer represented by formula (II) to a surface of the prepared glass; inducing and promoting a sol-gel reaction to bond the end bondable polymer to the surface of the glass; 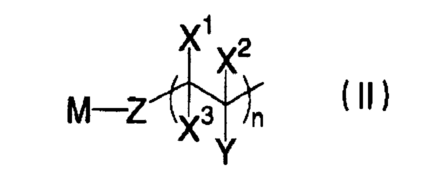 wherein X¹ to X³ each independently represent a hydrogen atom, a hydrocarbon group having 1 to 10 carbon atoms, or -CO₂R¹, R¹ represents a hydrogen atom, an alkaline metal, or a hydrocarbon group having 1 to 10 carbon atoms, 2 or more of X¹ to X³ may be bonded together to form a ring structure; Y represents a functional group having a molecular weight of 100,000 or less containing at least one group selected from the group consisting of -NHSO₂R², -NHCOR², -SO₂NHR³, -CONHR³, -CO₂R¹, -SO₃R¹, -PO₃R¹₂, -OR³, -Si(OR³)₃, and -CF₃, R¹ has the same meanings as above, R² represents a hydrocarbon group having 1 to 10 carbon atoms, R³ represents a hydrogen atom or a hydrocarbon group having 1 to 10 carbon atoms, and n represents a repeating unit number of 10 to 5,000; Z represents a divalent linking group containing an atom selected from C, H, N, O, and S; M represents -Si(OR¹)₃, -Ti(OR¹)₃, -Al(OR¹)₂, or -Zr(OR¹)₃.

15. The method for producing a surface antifogging, antisoiling, tempered glass of claim 14, wherein the coating liquid containing the end bondable polymer represented by formula (II) further includes a compound represented by formula (III):
(R⁵)ₘ-X-(OR⁶)₄₋ₘ (III)
wherein R⁵ represents a hydrogen atom, an alkyl group, or an aryl group; R⁶ represents an alkyl group or an aryl group; X represents Si, Al, Ti, or Zr; and m represents an integer of 0 to 2.
